(19) Europäisches Patentamt
European Patent Office
Office européen des brevets

(11) **EP 3 892 523 B1**

(12) **EUROPEAN PATENT SPECIFICATION**

(45) Date of publication and mention
of the grant of the patent:
**18.06.2025 Bulletin 2025/25**

(21) Application number: **19893975.3**

(22) Date of filing: **04.09.2019**

(51) International Patent Classification (IPC):
**B62D 6/00** *(2006.01)* **B62D 5/04** *(2006.01)*
**B62D 101/00** *(2006.01)* **B62D 111/00** *(2006.01)*
**B62D 113/00** *(2006.01)* **B62D 119/00** *(2006.01)*

(52) Cooperative Patent Classification (CPC):
**B62D 5/0463; B62D 5/049;** B62D 6/008

(86) International application number:
**PCT/JP2019/034834**

(87) International publication number:
**WO 2020/115973 (11.06.2020 Gazette 2020/24)**

(54) **VEHICLE STEERING DEVICE**

FAHRZEUGLENKVORRICHTUNG

DISPOSITIF DE DIRECTION DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.12.2018 JP 2018227347**

(43) Date of publication of application:
**13.10.2021 Bulletin 2021/41**

(73) Proprietor: **NSK Ltd.
Tokyo 141-8560 (JP)**

(72) Inventor: **MORI, Kenji
Fujisawa-shi, Kanagawa 251-8501 (JP)**

(74) Representative: **SSM Sandmair
Patentanwälte Rechtsanwalt
Partnerschaft mbB
Joseph-Wild-Straße 20
81829 München (DE)**

(56) References cited:
WO-A1-2018/147371    JP-A- 2001 233 228
JP-A- 2002 037 102    JP-A- 2011 148 336
JP-A- 2013 209 060    JP-A- H0 699 835
JP-A- S6 080 967     JP-A- S62 187 655
US-A1- 2008 294 313   US-B2- 6 448 728

## Description

Field

The present invention relates to a vehicle steering device.

Background

An electric power steering device (EPS) as a vehicle steering device applies assist force (steering supplementary force) to a steering system of the vehicle through rotational force of a motor. The EPS applies, as the assist force, drive power of the motor, which is controlled by electrical power supplied from an inverter, to a steering shaft or a rack shaft through a transmission mechanism including a deceleration mechanism. For example, a configuration in which a first control signal generated based on a steering torque and a vehicle speed, and a second control signal generated to reduce the deviation between the steering torque and a reference steering torque generated based on a steering angle are switched in accordance with behavior of the vehicle and the motor is driven is disclosed (for example, Patent Literature 1).

Citation List

Patent Literature

Patent Literature 1: Japanese Patent Laid-open No. 2004-131046

Summary

Technical Problem

In a configuration in which control is performed based on a vehicle speed, when a vehicle speed signal is not normally output, control is performed by using a predetermined alternative vehicle speed in some cases. When the alternative vehicle speed is a high speed such as 100 [km/h], assist force is excessive in a low speed range and provides discomfort to a wheel operation by a driver in some cases.
The present invention is made in view of the above-described problem and is intended to provide a vehicle steering device capable of preventing generation of excessive steering torque in a low speed range.

Solution to Problem

In order to achieve the above object, a vehicle steering device according to one aspect of the present invention configured to assist and control a steering system of a vehicle by driving and controlling a motor configured to assist steering force, wherein when the vehicle speed of the vehicle is a predetermined alternative vehicle speed, target steering torque is reduced in accordance with the absolute value of the difference between a physical quantity generated through turning motion of the vehicle and an estimated value of the physical quantity at the alternative vehicle speed.
With the above-described configuration, it is possible to prevent generation of excessive steering torque in a low speed range.
As a desirable aspect of the vehicle steering device, it preferably comprising: a vehicle motion estimation unit configured to estimate the estimated value of the physical quantity in accordance with a steering angle; and a torque gain setting unit configured to set a torque gain for the target steering torque in accordance with the absolute value of the difference between the physical quantity and the estimated value of the physical quantity.
Accordingly, it is possible to estimate the estimated value of the physical quantity at the alternative vehicle speed in accordance with the steering angle. In addition, it is possible to set the target steering torque based on the torque gain in accordance with the absolute value of the difference between the physical quantity and the estimated value of the physical quantity.
As a desirable aspect of the vehicle steering device, it is preferable that the torque gain setting unit reduces the torque gain when the vehicle speed is the alternative vehicle speed and the absolute value of the difference between the physical quantity and the estimated value of the physical quantity is equal to or larger than a predetermined threshold value.
Accordingly, when the vehicle speed is the alternative vehicle speed, it is possible to prevent setting to a value far from an ideal target steering torque at the actual vehicle speed.
As a desirable aspect of the vehicle steering device, it is preferable that the torque gain setting unit sets the torque gain to be one when the vehicle speed is not the alternative vehicle speed and the absolute value of the difference between the physical quantity and the estimated value of the physical quantity is smaller than a predetermined threshold value, and sets the torque gain to be a value smaller than one when the vehicle speed is the alternative vehicle speed and the absolute value of the difference between the physical quantity and the estimated value of the physical quantity is equal to or larger than the threshold value.

Accordingly, it is possible to set a target steering torque to be smaller when the vehicle speed is the alternative vehicle speed and the physical quantity along with turning motion of the vehicle is far from the estimated value than when the vehicle speed is not the alternative vehicle speed or when the vehicle speed is the alternative vehicle speed but the physical quantity along with turning motion of the vehicle is not far from the estimated value. Accordingly, when the vehicle speed is the alternative vehicle speed, it is possible to prevent setting to a value far from the ideal target steering torque at the actual vehicle speed.

As a desirable aspect of the vehicle steering device, it is preferable that the torque gain setting unit gradually reduces the torque gain to the set value when the vehicle speed is the alternative vehicle speed and the absolute value of the difference between the physical quantity and the estimated value of the physical quantity is equal to or larger than the threshold value.

Accordingly, it is possible to reduce discomfort due to abrupt change of the assist force.

As a desirable aspect of the vehicle steering device, it is preferable that the physical quantity is a yaw rate, and the vehicle motion estimation unit estimates an estimated yaw rate in accordance with the steering angle.

Accordingly, it is possible to perform control by using, as a parameter, the yaw rate that is the physical quantity generated through turning motion of the vehicle.

As a desirable aspect of the vehicle steering device, it is preferable that the physical quantity is lateral acceleration, and the vehicle motion estimation unit estimates an estimated lateral acceleration in accordance with the steering angle.

Accordingly, it is possible to perform control by using, as a parameter, the lateral acceleration that is the physical quantity generated through turning motion of the vehicle.

As a desirable aspect of the vehicle steering device, it is preferable that the physical quantity is self-aligning torque, and the vehicle motion estimation unit estimates estimated self-aligning torque in accordance with the steering angle.

Accordingly, it is possible to perform control by using, as a parameter, the self-aligning torque that is the physical quantity generated through turning motion of the vehicle.

Advantageous Effects of Invention

According to the present invention, it is possible to provide a vehicle steering device capable of preventing generation of excessive steering torque in a low speed range.

Brief Description of Drawings

FIG. 1 is a diagram illustrating a typical configuration of an electric power steering device.
FIG. 2 is a schematic diagram illustrating a hardware configuration of a control unit configured to control the electric power steering device.
FIG. 3 is a diagram illustrating an exemplary internal block configuration of a control unit in an electric power steering device according to a comparative example.
FIG. 4 is a structural diagram illustrating an exemplary installation of a rudder angle sensor.
FIG. 5 is a diagram illustrating an exemplary internal block configuration of a control unit according to a first embodiment.
FIG. 6 is an explanatory diagram of a steering direction.
FIG. 7 is a flowchart illustrating exemplary operation of the control unit according to the first embodiment.
FIG. 8 is a block diagram illustrating an exemplary configuration of a target steering torque generation unit of the first embodiment.
FIG. 9 is a diagram illustrating exemplary characteristics of a basic map held by a basic map unit.
FIG. 10 is a diagram illustrating exemplary characteristics of a damper gain map held by a damper gain map unit.
FIG. 11 is a diagram illustrating exemplary characteristics of a hysteresis correction unit.
FIG. 12 is a block diagram illustrating an exemplary configuration of a vehicle speed failure processing unit of the first embodiment.
FIG. 13 is a diagram illustrating exemplary characteristics of an estimated yaw rate map held by a vehicle motion estimation unit of the first embodiment.

FIG. 14 is an explanatory diagram of specific operation at a torque gain setting unit of the first embodiment.

FIG. 15 is a flowchart illustrating exemplary processing at the vehicle speed failure processing unit of the first embodiment.

FIG. 16 is a diagram illustrating an exemplary effect of a torque gain $A_G$ output from the vehicle speed failure processing unit.

FIG. 17 is a block diagram illustrating an exemplary configuration of a twist angle control unit of the first embodiment.

FIG. 18 is a diagram illustrating an exemplary internal block configuration of a control unit according to a second embodiment.

FIG. 19 is a block diagram illustrating an exemplary configuration of a target steering torque generation unit of the second embodiment.

FIG. 20 is a block diagram illustrating an exemplary configuration of a SAT information correction unit.

FIG. 21 is a schematic diagram illustrating the status of torque generated between a road surface and steering.

FIG. 22 is a diagram illustrating exemplary characteristics of a steering torque sensitive gain.

FIG. 23 is a diagram illustrating exemplary characteristics of a vehicle speed sensitive gain.

FIG. 24 is a diagram illustrating exemplary characteristics of a rudder angle sensitive gain.

FIG. 25 is a diagram illustrating exemplary setting of the upper and lower limit values of a torque signal at a restriction unit.

FIG. 26 is a block diagram illustrating an exemplary configuration of a vehicle speed failure processing unit of the second embodiment.

FIG. 27 is a diagram illustrating exemplary characteristics of an estimated yaw rate map held by a vehicle motion estimation unit of the second embodiment.

FIG. 28 is an explanatory diagram of specific operation at a torque gain setting unit of the second embodiment.

FIG. 29 is a flowchart illustrating exemplary processing at the vehicle speed failure processing unit of the second embodiment.

FIG. 30 is a block diagram illustrating an exemplary configuration of a twist angle control unit of the second embodiment.

FIG. 31 is a diagram illustrating an exemplary configuration of an SBW system in a manner corresponding to the typical configuration of the electric power steering device illustrated in FIG. 1.

FIG. 32 is a block diagram illustrating the configuration of a third embodiment.

FIG. 33 is a diagram illustrating an exemplary configuration of a target turning angle generation unit.

FIG. 34 is a diagram illustrating an exemplary configuration of a turning angle control unit.

FIG. 35 is a flowchart illustrating exemplary operation of the third embodiment.

Description of Embodiments

Modes for carrying out the invention (hereinafter referred to as embodiments) will be described below in detail with reference to the accompanying drawings. Note that, the present invention is not limited by the following embodiments. In addition, components in the embodiments described below include their equivalents such as those that could be easily thought of by the skilled person in the art and those identical in effect. Moreover, components disclosed in the embodiments described below may be combined as appropriate.

(First embodiment)

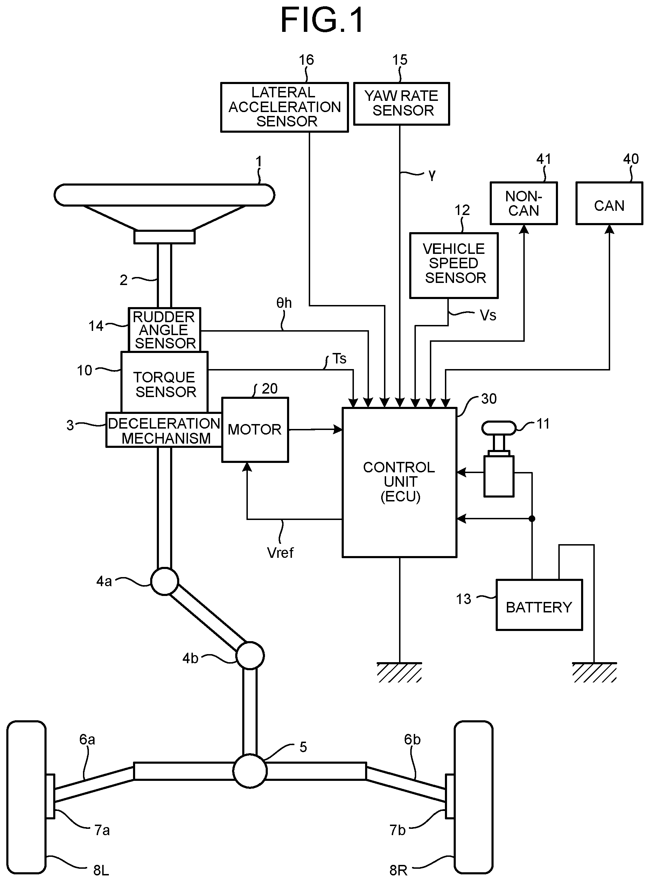

FIG. 1 is a diagram illustrating a typical configuration of an electric power steering device. The electric power steering device (EPS) as a vehicle steering device is coupled with steering wheels 8L and 8R through a column shaft (steering shaft or wheel shaft) 2 of a wheel 1, a deceleration mechanism 3, universal joints 4a and 4b, a pinion rack mechanism 5, and tie rods 6a and 6b and further through hub units 7a and 7b in an order in which force provided by a steering person transfers. In addition, a torque sensor 10 configured to detect steering torque Ts of the wheel 1 and a rudder angle sensor 14 configured to detect a steering angle θh are provided to the column shaft 2 including a torsion bar, and a motor 20 configured to assist steering force of the wheel 1 is coupled with the column shaft 2 through the deceleration mechanism 3. Electrical power is supplied from a battery 13 to a control unit (ECU) 30 configured to control the electric power steering device, and an ignition key signal is input to the control unit 30 through an ignition key 11. The control unit 30 performs calculation of a current command value of an assist (steering auxiliary) command based on the steering torque Ts detected by the torque sensor 10 and vehicle speed Vs detected by a vehicle speed sensor 12, and controls current supplied to the motor 20 through a voltage control command value Vref obtained by providing compensation or the like to the current command value.

The control unit 30 is connected with an on-board network such as a controller area network (CAN) 40 through which various kinds of information of a vehicle are transmitted and received. In addition, the control unit 30 is connectable with a non-CAN 41 configured to transmit and receive communication other than the CAN 40, analog and digital signals, radio wave, and the like.

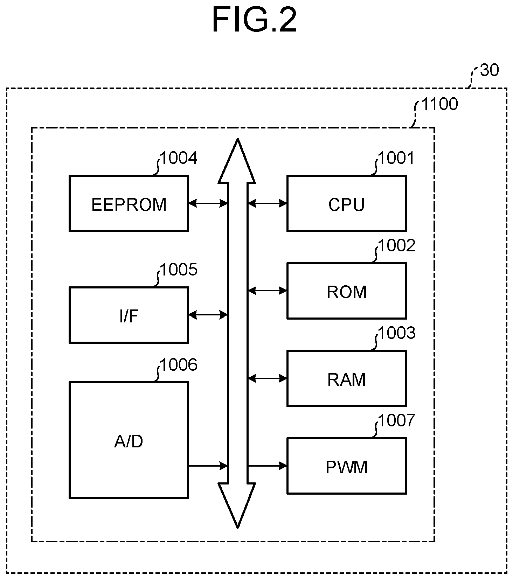

The control unit 30 is mainly configured as a CPU (including an MCU and an MPU). FIG. 2 is a schematic diagram illustrating a hardware configuration of the control unit configured to control the electric power steering device.

A control computer 1100 configured as the control unit 30 includes a central processing unit (CPU) 1001, a read only memory (ROM) 1002, a random access memory (RAM) 1003, an electrically erasable programmable rom (EEPROM) 1004, an interface (I/F) 1005, an analog/digital (A/D) converter 1006, and a pulse width modulation (PWM) controller 1007, and these components are connected with a bus.

The CPU 1001 is a processing device configured to execute a computer program for control (hereinafter referred to as a control program) of the electric power steering device and control the electric power steering device.

The ROM 1002 stores a control program for controlling the electric power steering device. In addition, the RAM 1003 is used as a work memory for operating the control program. The EEPROM 1004 stores, for example, control data input to and output from the control program. The control data is used on the control program loaded onto the RAM 1003 after the control unit 30 is powered on, and is overwritten to the EEPROM 1004 at a predetermined timing.

The ROM 1002, the RAM 1003, the EEPROM 1004, and the like are storage devices configured to store information and are storage devices (primary storage devices) directly accessible from the CPU 1001.

The A/D converter 1006 receives, for example, signals of the steering torque Ts, a detected current value Im of the motor 20, and the steering angle θh and converts the signals into digital signals.

The interface 1005 is connected with the CAN 40. The interface 1005 receives a signal (vehicle speed pulse) of a vehicle speed V from the vehicle speed sensor 12.

The PWM controller 1007 outputs a PWM control signal of each UVW phase based on a current command value to the motor 20.

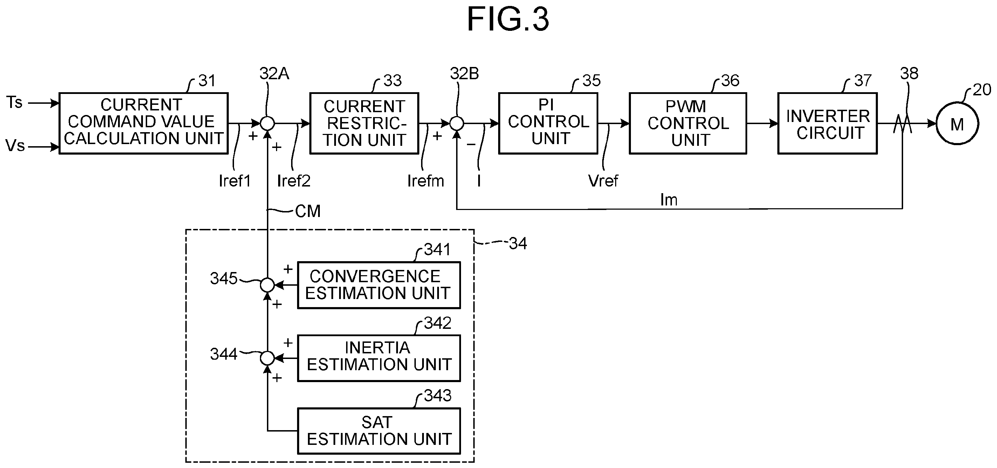

FIG. 3 is a diagram illustrating an exemplary internal block configuration of a control unit in an electric power steering device according to a comparative example. The steering torque Ts and the vehicle speed Vs are input to a current command value calculation unit 31. The current command value calculation unit 31 refers to, based on the steering torque Ts and the vehicle speed Vs, a look-up table (such as an assist map) stored in advance and calculates a current command value Iref1 that is a control target value of current supplied to the motor 20.

A compensation signal generation unit 34 generates a compensation signal CM. The compensation signal generation unit 34 includes a convergence estimation unit 341, an inertia estimation unit 342, and a self-aligning torque (SAT) estimation unit 343. The convergence estimation unit 341 estimates the yaw rate of the vehicle based on the angular velocity of the motor 20, and estimates a compensation value with which shake operation of the wheel 1 is reduced to improve convergence of the yaw of the vehicle. The inertia estimation unit 342 estimates the inertial force of the motor 20 based on the angular acceleration of the motor 20, and estimates a compensation value with which the inertial force of the motor 20 is compensated to improve response. The SAT estimation unit 343 estimates self-aligning torque based on the steering torque Ts, assist torque, and the angular velocity and angular acceleration of the motor 20, and estimates a compensation value with which the assist torque is compensated with the self-aligning torque as reaction force. The compensation signal generation unit 34 may include an estimation unit configured to estimate another compensation value in addition to the convergence estimation unit 341, the inertia estimation unit 342, and the SAT estimation unit 343. The compensation signal CM is a sum obtained by adding, at an addition unit 345, the compensation value of the convergence estimation unit 341 and a sum obtained by adding the compensation value of the inertia estimation unit 342 and the compensation value of the SAT estimation unit 343 at an addition unit 344.

At an addition unit 32A, the compensation signal CM from the compensation signal generation unit 34 is added to the current command value Iref1, and characteristic compensation of a steering system is provided to the current command value Iref1 through the addition of the compensation signal CM to improve convergence, an inertia characteristic, and the like. Then, the current command value Iref1 becomes a current command value Iref2 provided with characteristic compensation through the addition unit 32A, and the current command value Iref2 is input to a current restriction unit 33. At the current restriction unit 33, largest current of the current command value Iref2 is restricted, and a current command value Irefm is generated. The current command value Irefm is input to a subtraction unit 32B, and a deviation I (Irefm - Im) from the detected current value Im fed back from the motor 20 side is calculated at the subtraction unit 32B. The deviation I is input to a PI control unit 35 for characteristic improvement of steering operation. Accordingly, the voltage control command value Vref, characteristics of which are improved at the PI control unit 35 is input to a PWM control unit 36, and in addition, the motor 20 is PWM-driven through an inverter circuit 37 as a motor drive unit. The detected current value Im of the motor 20 is detected by a current detector 38 and fed back to the subtraction unit 32B. In addition, the inverter circuit 37 includes a field effect transistor (hereinafter referred to as a FET) as a drive element and is configured as a bridge circuit of the FET.

In assist control by the conventional electric power steering device, steering torque manually applied by a driver is detected by a torque sensor as twist torque of the torsion bar, and motor current is controlled as assist current mainly in accordance with the torque. However, when control is performed by this method, the steering torque changes depending on the steering angle because of difference in the state (for example, tilt) of a road surface in some cases. The steering torque is also affected by variation of a motor output characteristic due to long-term use in some cases.

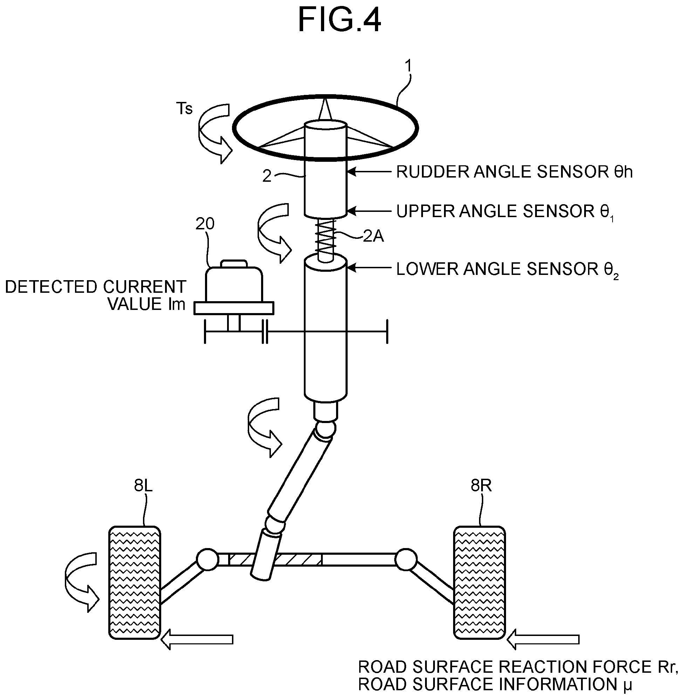

FIG. 4 is a structural diagram illustrating exemplary installation of the rudder angle sensor.

The column shaft 2 includes a torsion bar 2A. Road surface reaction force Rr and road surface information $\mu$ act on the steering wheels 8L and 8R. An upper angle sensor is provided on the wheel side of the column shaft 2 with respect to the torsion bar 2A. A lower angle sensor is provided on the steering wheel side of the column shaft 2 with respect to the torsion bar 2A. The upper angle sensor detects a wheel angle $\theta_1$, and the lower angle sensor detects a column angle $\theta_2$. The steering angle $\theta h$ is detected by a rudder angle sensor provided at an upper part of the column shaft 2. The twist angle $\Delta\theta$ of the torsion bar is expressed in Expression (1) below based on the deviation between the wheel angle $\theta_1$ and the column angle $\theta_2$. In addition, torsion bar torque Tt is expressed in Expression (2) below by using the twist angle $\Delta\theta$ of the torsion bar expressed in Expression (1). Note that, Kt represents the spring constant of the torsion bar 2A.

$$\Delta\theta = \theta_2 - \theta_1 \qquad\qquad (1)$$

$$Tt = -Kt \times \Delta\theta \qquad\qquad (2)$$

The torsion bar torque Tt may be detected by using a torque sensor. In the present embodiment, the torsion bar torque Tt is treated as the steering torque Ts.

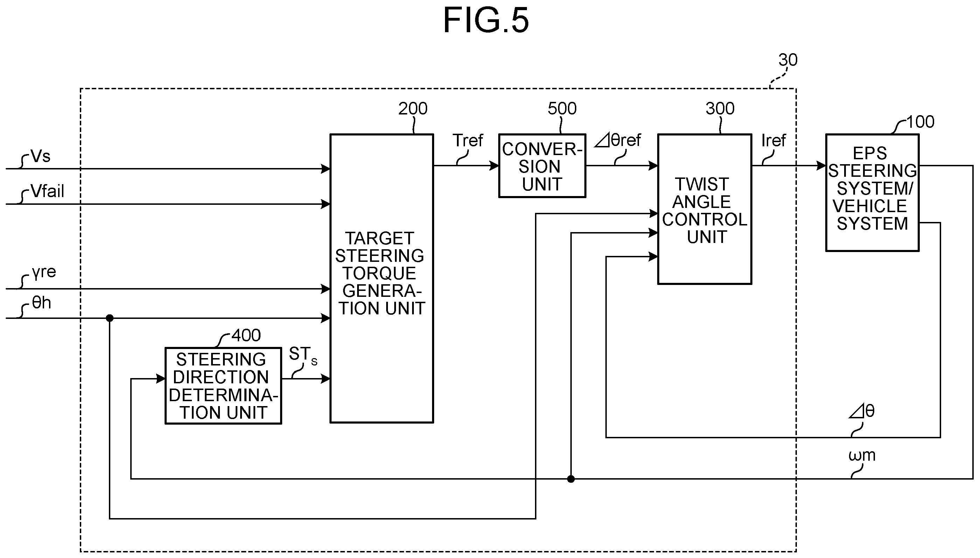

FIG. 5 is a diagram illustrating an exemplary internal block configuration of the control unit according to a first embodiment.

The control unit 30 includes, as internal block components, a target steering torque generation unit 200, a twist angle control unit 300, a steering direction determination unit 400, and a conversion unit 500.

In the present embodiment, wheel steering by the driver is assisted and controlled by the motor 20 of an EPS steering system/vehicle system 100. The EPS steering system/vehicle system 100 includes an angle sensor and an angular velocity calculation unit in addition to the motor 20.

The target steering torque generation unit 200 generates a target steering torque Tref that is a target value of the steering torque when the steering system of the vehicle is assisted and controlled in the present disclosure. The conversion unit 500 converts the target steering torque Tref into a target twist angle $\Delta\theta$ref. The twist angle control unit 300 generates a motor current command value Iref that is a control target value of current supplied to the motor 20.

The twist angle control unit 300 calculates the motor current command value Iref with which the twist angle $\Delta\theta$ is equal to the target twist angle $\Delta\theta$ref. The motor 20 is driven by the motor current command value Iref.

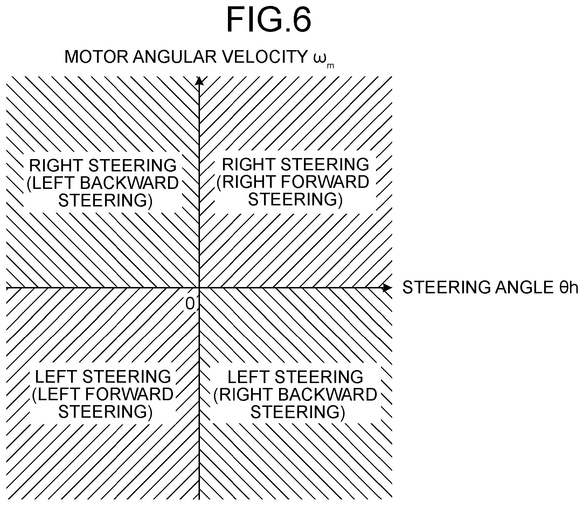

The steering direction determination unit 400 determines whether the steering direction is right or left based on a motor angular velocity $\omega m$ output from the EPS steering system/vehicle system 100, and outputs a result of the determination as a steering state signal STs. FIG. 6 is an explanatory diagram of the steering direction.

A steering state indicating whether the steering direction is right or left can be obtained as, for example, the relation between the steering angle $\theta h$ and the motor angular velocity $\omega m$ as illustrated in FIG. 6. Specifically, the steering direction is determined to be "right" when the motor angular velocity $\omega m$ is a positive value, or the steering direction is determined to be "left" when the motor angular velocity $\omega m$ is a negative value. Note that, an angular velocity calculated by performing speed calculation on the steering angle $\theta h$, the wheel angle $\theta_1$, or the column angle $\theta_2$ may be used in place of the motor angular velocity $\omega m$.

The conversion unit 500 converts the target steering torque Tref generated at the target steering torque generation unit 200 into the target twist angle $\Delta\theta$ref by using the relation of Expression (2) above.

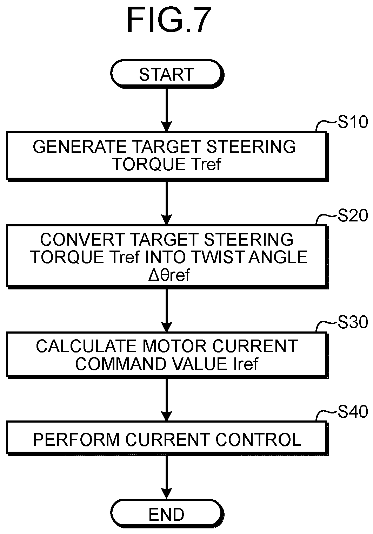

Subsequently, exemplary basic operation at the control unit of the first embodiment will be described below. FIG. 7 is a flowchart illustrating exemplary operation of the control unit according to the first embodiment.

The steering direction determination unit 400 determines whether the steering direction is right or left based on the sign of the motor angular velocity $\omega m$ output from the EPS steering system/vehicle system 100, and outputs a result of the determination as the steering state signal STs to the target steering torque generation unit 200 (step S10).

The target steering torque generation unit 200 generates the target steering torque Tref based on the vehicle speed Vs, a vehicle speed determination signal Vfail, the steering state signal STs, the steering angle $\theta h$, and a real yaw rate $\gamma$re (step S20).

The conversion unit 500 converts the target steering torque Tref generated at the target steering torque generation unit 200 into the target twist angle $\Delta\theta$ref (step S20). The target twist angle $\Delta\theta$ref is output to the twist angle control unit 300.

The twist angle control unit 300 calculates the motor current command value Iref based on the target twist angle $\Delta\theta$ref, the steering angle $\theta h$, the twist angle $\Delta\theta$, and the motor angular velocity $\omega m$ (step S30).

Then, current control is performed to drive the motor 20 based on the motor current command value Iref output from the twist angle control unit 300 (step S40).

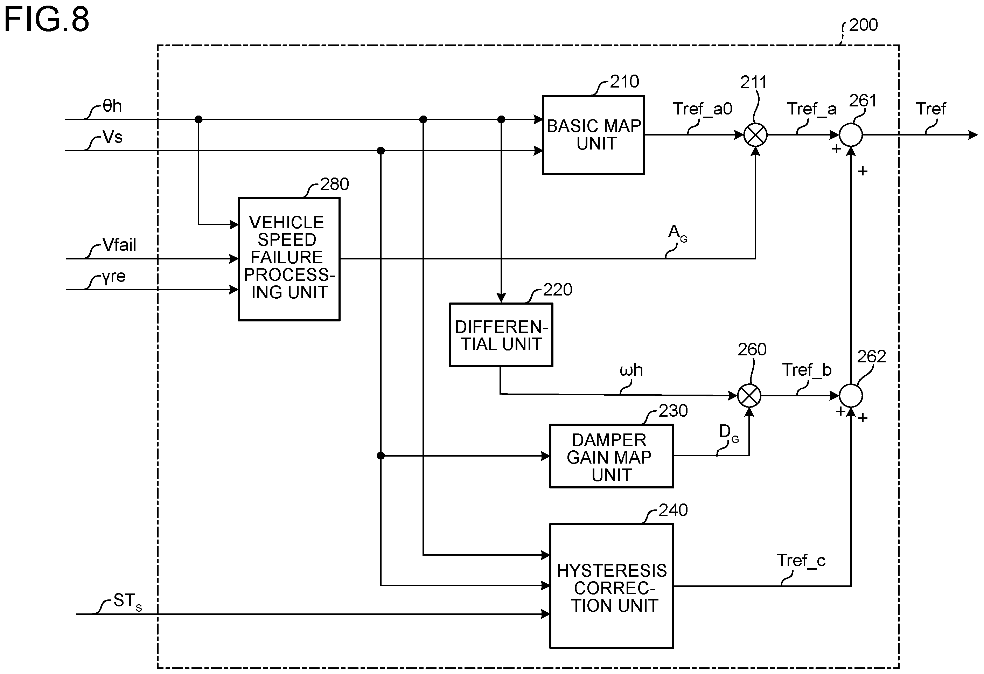

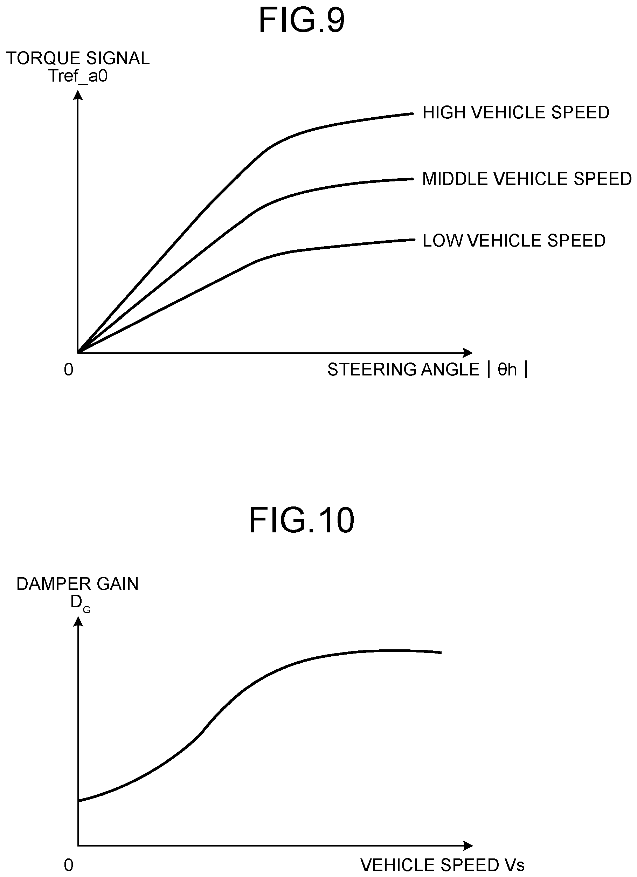

FIG. 8 is a block diagram illustrating an exemplary configuration of the target steering torque generation unit of the first embodiment. As illustrated in FIG. 8, the target steering torque generation unit 200 includes a basic map unit 210, a multiplication unit 211, a differential unit 220, a damper gain map unit 230, a hysteresis correction unit 240, a SAT information correction unit 250, a multiplication unit 260, addition units 261, 262, and 263, and a vehicle speed failure processing unit 280. FIG. 9 is a diagram illustrating exemplary characteristics of a basic map held by the basic map unit. FIG. 10 is a diagram illustrating exemplary characteristics of a damper gain map held by the damper gain map unit.

The steering angle $\theta h$ and the vehicle speed Vs are input to the basic map unit 210. The basic map unit 210 outputs a torque signal Tref_a0 having the vehicle speed Vs as a parameter by using the basic map illustrated in FIG. 9. Specifically, the basic map unit 210 outputs the torque signal Tref_a0 in accordance with the vehicle speed Vs.

As illustrated in FIG. 9, the torque signal Tref_a0 has such a characteristic that the torque signal Tref_a0 increases as the magnitude (absolute value) $|\theta h|$ of the steering angle $\theta h$ increases. In addition, a torque signal Tref_a has such a characteristic that the torque signal Tref_a increases as the vehicle speed Vs increases. Note that, the map is configured with the magnitude $|\theta h|$ of the steering angle $\theta h$ in FIG. 9 but may be configured in accordance with the positive and negative values of the steering angle $\theta h$, and in this case, different change aspects may be applied depending on whether the steering angle $\theta h$ is positive or negative.

The steering angle $\theta h$ is input to the differential unit 220. The differential unit 220 calculates a rudder angular velocity $\omega h$ that is angular velocity information by differentiating the steering angle $\theta h$. The differential unit 220 outputs the calculated rudder angular velocity $\omega h$ to the multiplication unit 260.

The vehicle speed Vs is input to the damper gain map unit 230. The damper gain map unit 230 outputs a damper gain $D_G$ in accordance with the vehicle speed Vs by using a vehicle speed sensitive damper gain map illustrated in FIG. 10.

As illustrated in FIG. 10, the damper gain $D_G$ has such a characteristic that the damper gain $D_G$ gradually increases as the vehicle speed Vs increases. The damper gain $D_G$ may be variable in accordance with the steering angle $\theta h$.

The multiplication unit 260 multiplies the rudder angular velocity $\omega h$ output from the differential unit 220 by the damper gain $D_G$ output from the damper gain map unit 230, and outputs a result of the multiplication as a torque signal Tref_b to the addition unit 262.

The steering direction determination unit 400 performs determination as illustrated in, for example, FIG. 6. The steering angle $\theta h$, the vehicle speed Vs, and the steering state signal STs, which is a result of the determination illustrated in FIG. 6, are input to the hysteresis correction unit 240. The hysteresis correction unit 240 calculates a torque signal Tref_c based on the steering angle $\theta h$ and the steering state signal STs by using Expressions (3) and (4) below. Note that, in Expressions (3) and (4) below, x represents the steering angle $\theta h$, and $y_R$ = Tref_c and $y_L$ = Tref_c represent the torque signal (fourth torque signal) Tref_c. In addition, a coefficient "a" is a value larger than one, and a coefficient "c" is a value larger than zero. A coefficient Ahys indicates the output width of a hysteresis characteristic, and the coefficient "c" indicates the roundness of the hysteresis characteristic.

$$y_R = Ahys\{1 - a^{-c(x-b)}\} \tag{3}$$

$$y_L = -Ahys\{1 - a^{c(x-b')}\} \tag{4}$$

In a case of right steering, the torque signal (fourth torque signal) Tref_c ($y_R$) is calculated by using Expression (3) above. In a case of left steering, the torque signal (fourth torque signal) Tref_c ($y_L$) is calculated by using Expression (4) above. Note that, when switching is made from right steering to left steering or when switching is made from left steering to right steering, a coefficient "b" or "b'" indicated in Expression (5) or (6) below is substituted into Expressions (3) and (4) above after steering switching based on the values of final coordinates $(x_1, y_1)$ that are the previous values of the steering angle $\theta h$ and the torque signal Tref_c. Accordingly, continuity through steering switching is maintained.

$$b = x_1 + (1/c)\log_a\{1 - (y_1/Ahys)\} \tag{5}$$

$$b' = x_1 - (1/c)\log_a\{1 - (y_1/Ahys)\} \tag{6}$$

Expressions (5) and (6) above can be derived by substituting $x_1$ into x and substituting $y_1$ into $y_R$ and $y_L$ in Expressions (3) and (4) above.

For example, when Napierian logarithm e is used as the coefficient "a", Expressions (3), (4), (5), and (6) above can be expressed as Expressions (7), (8), (9), and (10) below, respectively.

$$y_R = Ahys[1 - exp\{-c(x - b)\}] \tag{7}$$

$$y_L = -Ahys[\{1 - \exp\{c(x - b')\}\}] \qquad (8)$$

$$b = x_1 + (1/c)\log_e\{1 - (y_1/Ahys)\} \qquad (9)$$

$$b' = x_1 - (1/c)\log_e\{1 - (y_1/Ahys)\} \qquad (10)$$

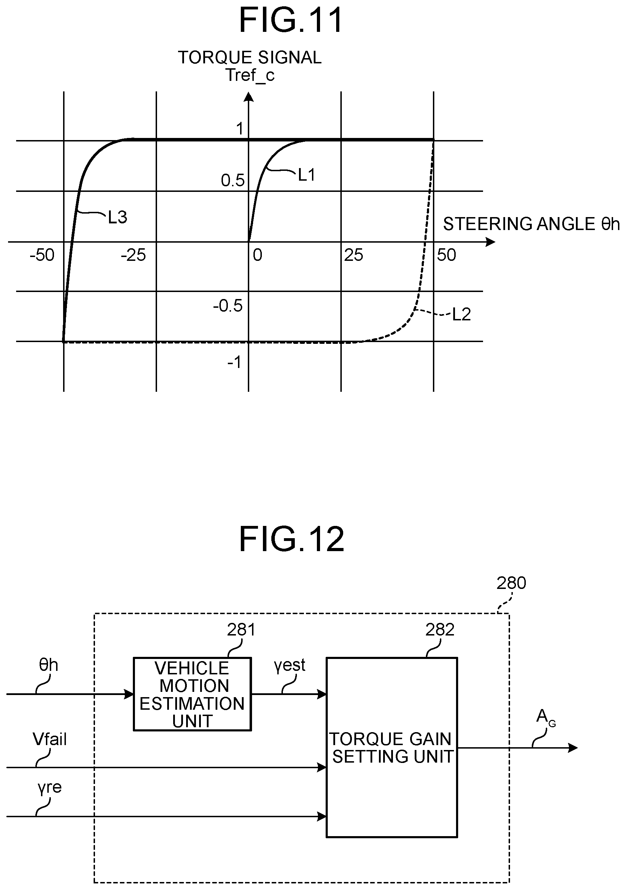

FIG. 11 is a diagram illustrating exemplary characteristics of the hysteresis correction unit. The example illustrated in FIG. 11 indicates an exemplary characteristic of the torque signal Tref_c subjected to hysteresis correction when Ahys = 1 [Nm] and c = 0.3 are set in Expressions (9) and (10) above and steering is performed from 0 [deg] to +50 [deg] or -50 [deg]. As illustrated in FIG. 11, the torque signal Tref_c output from the hysteresis correction unit 240 has a hysteresis characteristic such as the origin at zero → L1 (thin line) → L2 (dashed line) → L3 (bold line).

Note that, the coefficient Ahys, which indicates the output width of the hysteresis characteristic, and the coefficient "c", which indicates the roundness thereof may be variable in accordance with one or both of the vehicle speed Vs and the steering angle $\theta$h.

In addition, the rudder angular velocity $\omega$h is obtained through the differential calculation on the steering angle $\theta$h but is provided with low-pass filter (LPF) processing as appropriate to reduce influence of noise in a higher range. In addition, the differential calculation and the LPF processing may be performed with a high-pass filter (HPF) and a gain. Moreover the rudder angular velocity $\omega$h may be calculated by performing the differential calculation and the LPF processing not on the steering angle $\theta$h but on a wheel angle $\theta$1 detected by the upper angle sensor or a column angle $\theta$2 detected by the lower angle sensor. The motor angular velocity $\omega$m may be used as the angular velocity information in place of the rudder angular velocity $\omega$h, and in this case, the differential unit 220 is not needed.

As illustrated in FIG. 12, the steering angle $\theta$h, the vehicle speed determination signal Vfail, and the real yaw rate $\gamma$re detected by a yaw rate sensor 15 (refer to FIG. 1) provided to the own-vehicle are input to the vehicle speed failure processing unit 280.

The vehicle speed sensor 12 (refer to FIG. 1) outputs, as a vehicle speed signal, a pulse signal in accordance with the vehicle speed. When the vehicle speed sensor 12 fails and the vehicle speed signal (pulse signal in accordance with the vehicle speed) is not normally output, control based on the vehicle speed Vs cannot be performed. Thus, when the vehicle speed signal is not normally output, control using a predetermined alternative vehicle speed is performed.

The vehicle speed determination signal Vfail is a signal indicating whether the vehicle speed signal is normally output from the vehicle speed sensor 12. When the vehicle speed signal is not normally output, the predetermined alternative vehicle speed is input as the vehicle speed Vs to the vehicle speed failure processing unit 280. In other words, the vehicle speed determination signal Vfail is a signal indicating whether the vehicle speed Vs is the alternative vehicle speed. In the present embodiment, the alternative vehicle speed is set to be, for example, 100 [km/h]. Note that, a component configured to output the vehicle speed determination signal Vfail and the alternative vehicle speed may be configured as, for example, a circuit outside the control unit 30.

The present embodiment describes an example in which the real yaw rate $\gamma$re detected by the yaw rate sensor 15 is input as a physical quantity generated through turning motion of the vehicle. Real lateral acceleration detected by a lateral acceleration sensor 16 (refer to FIG. 1) provided to the own-vehicle may be input as the physical quantity generated through turning motion of the vehicle in place of the real yaw rate $\gamma$re.

FIG. 12 is a block diagram illustrating an exemplary configuration of the vehicle speed failure processing unit of the first embodiment. The vehicle speed failure processing unit 280 of the first embodiment includes a vehicle motion estimation unit 281 and a torque gain setting unit 282.

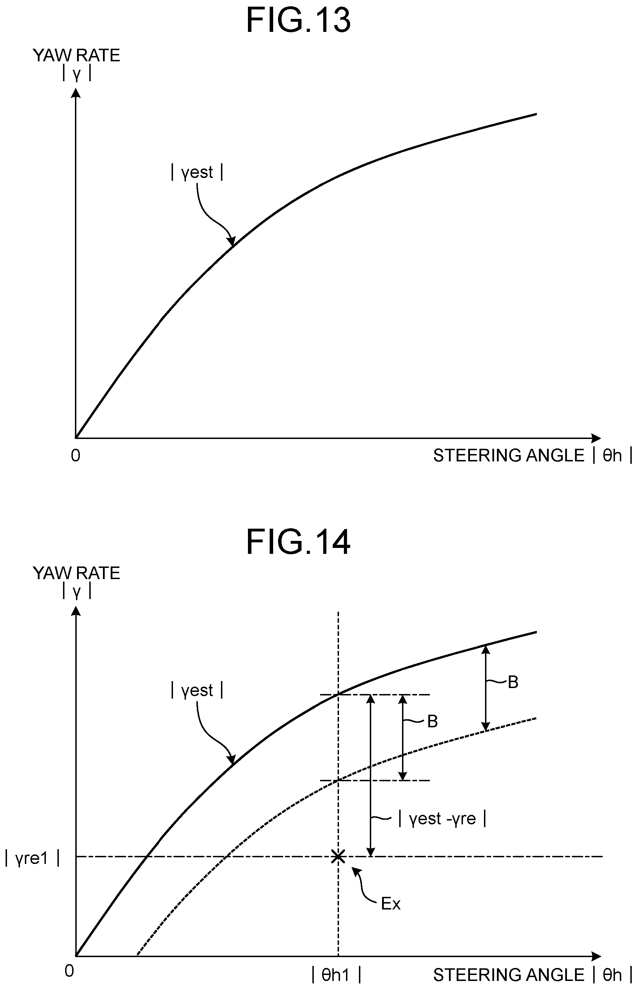

The steering angle $\theta$h is input to the vehicle motion estimation unit 281. The vehicle motion estimation unit 281 holds an estimated yaw rate map representing the relation between the steering angle $\theta$h and a yaw rate $\gamma$ at an alternative speed (for example, 100 [km/h]). FIG. 13 is a diagram illustrating exemplary characteristics of the estimated yaw rate map held by a vehicle motion estimation unit of the first embodiment. Note that, the relation between the steering angle $\theta$h and the yaw rate $\gamma$ may be expressed by using an expression based on, for example, a vehicle model called a single-track Model.

The vehicle motion estimation unit 281 outputs an estimated yaw rate $\gamma$est in accordance with the steering angle $\theta$h by using the estimated yaw rate map (the expression indicating the relation between the steering angle $\theta$h and the yaw rate $\gamma$ at the alternative speed) illustrated in FIG. 13.

The estimated yaw rate $\gamma$est output from the vehicle motion estimation unit 281, the vehicle speed determination signal Vfail, and the real yaw rate $\gamma$re are input to the torque gain setting unit 282. The torque gain setting unit 282 generates a torque gain $A_G$ based on the estimated yaw rate $\gamma$est, the vehicle speed determination signal Vfail, and the real yaw rate $\gamma$re.

Specifically, the torque gain setting unit 282 determines whether the vehicle speed Vs is normally detected, in other words, whether the vehicle speed Vs is the alternative vehicle speed based on the vehicle speed determination signal Vfail. When the vehicle speed Vs is the alternative vehicle speed, the torque gain setting unit 282 generates the torque gain $A_G$ in accordance with the absolute value $|\gamma est - \gamma re|$ of the difference between the estimated yaw rate $\gamma est$ and the real yaw rate $\gamma re$. In the present embodiment, the torque gain setting unit 282 holds a predetermined threshold value B for the absolute value $|\gamma est - \gamma re|$ of the difference between the estimated yaw rate $\gamma est$ and the real yaw rate $\gamma re$.

FIG. 14 is an explanatory diagram of specific operation at the torque gain setting unit of the first embodiment. In the example illustrated in FIG. 14, a solid line represents the absolute value $|\gamma est|$ of the estimated yaw rate $\gamma est$. In addition, in the example illustrated in FIG. 14, a dashed line represents a value smaller than the absolute value $|\gamma est|$ of the estimated yaw rate $\gamma est$ by the predetermined threshold value B.

The torque gain setting unit 282 reduces the torque gain $A_G$ when the vehicle speed Vs is the alternative vehicle speed and the absolute value $|\gamma est - \gamma re|$ of the difference between the estimated yaw rate $\gamma est$ and the real yaw rate $\gamma re$ is equal to or larger than the threshold value B.

The example illustrated in FIG. 14 indicates a point Ex where the absolute value of the steering angle $\theta h$ is $|\theta h1|$ and the absolute value of the real yaw rate $\gamma re$ is $|\gamma re1|$. FIG. 14 illustrates an example in which the absolute value $|\gamma est - \gamma re|$ of the difference between the estimated yaw rate $\gamma est$ and the real yaw rate $\gamma re$ is equal to or larger than the threshold value B ($|\gamma est - \gamma re| \geq B$).

The torque gain $A_G$ of the first embodiment is expressed in Expression (11) below. In Expression (11) below, a coefficient "A" is a real number equal to or larger than one.

$$A_G = 1/A \qquad\qquad\qquad (11)$$

When the vehicle speed Vs is the alternative vehicle speed and $|\gamma est - \gamma re| \geq B$ is satisfied, the torque gain setting unit 282 sets the torque gain $A_G$ to be smaller than one. In other words, the coefficient "A" indicated in Expression (11) above is set to be a value larger than one.

Note that, when the vehicle speed Vs is normally detected, in other words, when the vehicle speed determination signal Vfail indicates that the vehicle speed Vs is normal, the torque gain setting unit 282 sets the torque gain $A_G$ to be one. The torque gain setting unit 282 sets the torque gain $A_G$ to be one also when the absolute value $|\gamma est - \gamma re|$ of the difference between the estimated yaw rate $\gamma est$ and the real yaw rate $\gamma re$ when the vehicle speed Vs is the alternative vehicle speed is smaller than the threshold value B ($|\gamma est - \gamma re|<B$). In other words, the coefficient "A" indicated in Expression (11) above is set to be one.

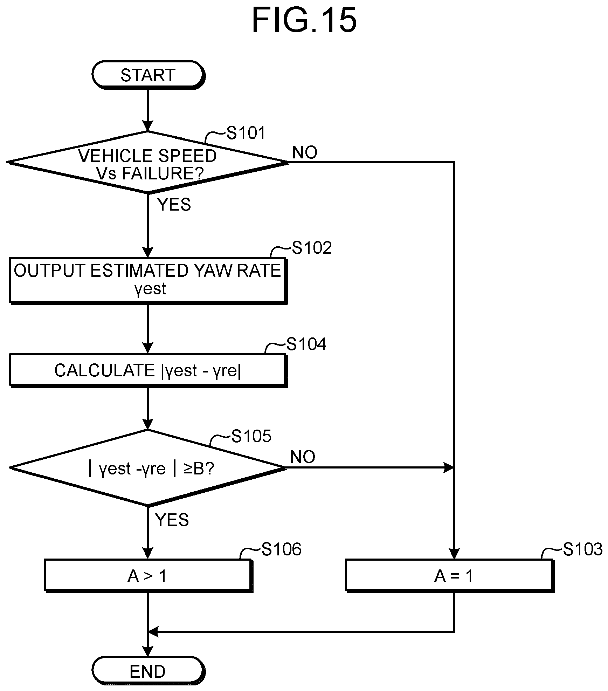

FIG. 15 is a flowchart illustrating exemplary processing at the vehicle speed failure processing unit of the first embodiment.

The torque gain setting unit 282 determines whether the vehicle speed Vs is the alternative vehicle speed based on the vehicle speed determination signal Vfail (step S101).

When the vehicle speed Vs is not the alternative vehicle speed (No at step S101), in other words, when the vehicle speed Vs is normally detected, the torque gain setting unit 282 sets the coefficient "A" in the torque gain $A_G$ = 1/A to be one (step S103), and ends the processing.

When the vehicle speed Vs is the alternative vehicle speed (Yes at step S101), the vehicle motion estimation unit 281 outputs the estimated yaw rate $\gamma est$ in accordance with the steering angle $\theta h$ by using the estimated yaw rate map illustrated in, for example, FIG. 13 (step S102).

The torque gain setting unit 282 calculates the absolute value $|\gamma est - \gamma re|$ of the difference between the estimated yaw rate $\gamma est$ and the real yaw rate $\gamma re$ (step S104).

Subsequently, the torque gain setting unit 282 determines whether the absolute value $|\gamma est - \gamma re|$ of the difference between the estimated yaw rate $\gamma est$ and the real yaw rate $\gamma re$ is equal to or larger than the predetermined threshold value B ($|\gamma est - \gamma re| \geq B$) (step S105).

When the absolute value $|\gamma est - \gamma re|$ of the difference between the estimated yaw rate $\gamma est$ and the real yaw rate $\gamma re$ is smaller than the threshold value B ($|\gamma est - \gamma re|<B$) (No at step S105), the torque gain setting unit 282 sets the coefficient "A" in the torque gain $A_G$ = 1/A to be one (step S103), and ends the processing.

When the absolute value $|\gamma est - \gamma re|$ of the difference between the estimated yaw rate $\gamma est$ and the real yaw rate $\gamma re$ is equal to or larger than the threshold value B ($|\gamma est - \gamma re| \geq B$) (Yes at step S105), the torque gain setting unit 282 sets the coefficient "A" in the torque gain $A_G$ = 1/A to be a predetermined value larger than one (step S106), and ends the processing.

Referring back to FIG. 8, the multiplication unit 211 multiplies the torque signal Tref_a0 output from the basic map unit 210 by the torque gain $A_G$ output from the vehicle speed failure processing unit 280, and outputs a result of the multiplication as the torque signal Tref_a to the addition unit 261.

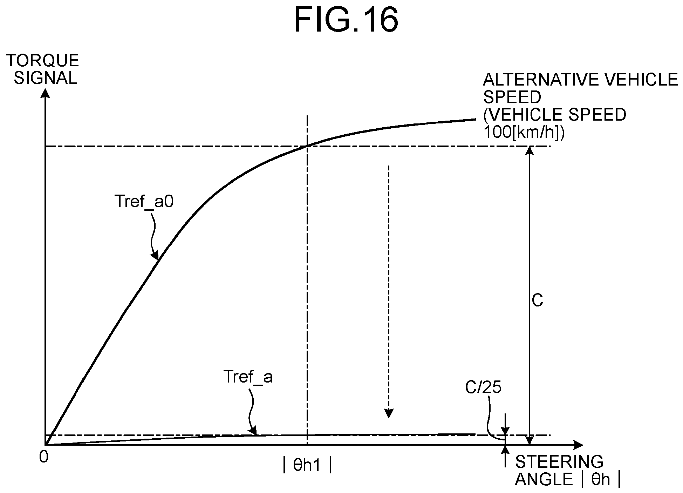

FIG. 16 is a diagram illustrating an exemplary effect of the torque gain $A_G$ output from the vehicle speed failure processing unit. When the vehicle speed Vs is the alternative vehicle speed, the predetermined alternative vehicle speed (for example, 100 [km/h]) is input as the vehicle speed Vs to the basic map unit 210. In this case, the value of the torque signal Tref_a0 output from the basic map unit 210 is a value in accordance with the alternative speed (in this example, 100 [km/h]).

With a configuration in which the vehicle speed failure processing unit 280 of the first embodiment is not employed, the torque signal Tref_a0 output from the basic map unit 210 is output as the torque signal Tref_a.

The torque signals Tref_a, Tref_b, and Tref_c obtained as described above are added together at the addition units 261 and 262 and output as the target steering torque Tref.

With the configuration in which the vehicle speed failure processing unit 280 of the first embodiment is not employed, the target steering torque Tref becomes a large value in accordance with the alternative vehicle speed, for example, when the driver largely operates the wheel 1 before stopping the vehicle while the vehicle speed sensor 12 fails and the alternative vehicle speed (for example, 100 [km/h]) is output as the vehicle speed Vs, and then the vehicle stops with the steering angle $\theta$h at, for example, 100 [deg]. When the driver takes hands off the wheel 1 in this state, the steering angle $\theta$h is controlled to decrease by assist control. Thus, for example, when the driver operates the wheel 1 and stops the wheel 1 in a right or left state to turn right or left at an intersection, the driver needs to hold the wheel 1. Thus, anomalous behavior called self-steering, which is not intended by the driver, occurs.

The above-described anomalous behavior can be prevented by employing the vehicle speed failure processing unit 280 of the first embodiment. In the example illustrated in FIG. 16, the torque gain $A_G$ output from the torque gain setting unit 282 is 0.04 (in other words, the coefficient "A" in the torque gain $A_G = 1/A$ is 25). Accordingly, the value of the torque signal Tref_a obtained by multiplying a value C of the torque signal Tref_a0 output from the basic map unit 210 by the torque gain $A_G$ (=0.04) at the multiplication unit 211 is 1/25 of the value of the torque signal Tref_a0, in other words, C/25. Thus, it is possible to prevent generation of excessive steering torque that causes self-steering during stopping due to assist control in a state in which the vehicle speed sensor 12 fails and the alternative vehicle speed (for example, 100 [km/h]) is output as the vehicle speed Vs.

Note that, the position at which the multiplication unit 211 is provided is not limited to a later stage of the basic map unit 210 as illustrated in FIG. 8, but may be, for example, a later stage of the addition units 261 and 262.

When the vehicle speed Vs is the alternative vehicle speed and the absolute value $|\gamma est - \gamma re|$ of the difference between the estimated yaw rate $\gamma est$ and the real yaw rate $\gamma re$ is equal to or larger than the threshold value B, the torque gain setting unit 282 may gradually reduce the value of the torque gain $A_G$ at stages from one, or may change the torque gain $A_G$ in accordance with the magnitude of the absolute value $|\gamma est - \gamma re|$ of the difference between the estimated yaw rate $\gamma est$ and the real yaw rate $\gamma re$. Accordingly, it is possible to reduce discomfort due to abrupt change of assist force.

The yaw rate sensor 15 configured to detect the real yaw rate $\gamma re$ only needs to output a detected value, for example, when the steering angle $\theta$h changes by several [deg], and does not need to be particularly highly accurate. Thus, it is possible to use the yaw rate sensor 15 that is relatively inexpensive.

The detected value of the yaw rate sensor 15 is desirably directly input to the control unit 30, not through the CAN 40. Accordingly, it is possible to prevent the above-described anomalous behavior when the alternative vehicle speed is input as the vehicle speed Vs due to failure of the CAN 40.

The yaw rate sensor 15 desirably has a self-diagnosis function. This can prevent assist function failure and, for example, makes it possible to notify the driver of anomaly through a provided warning lamp.

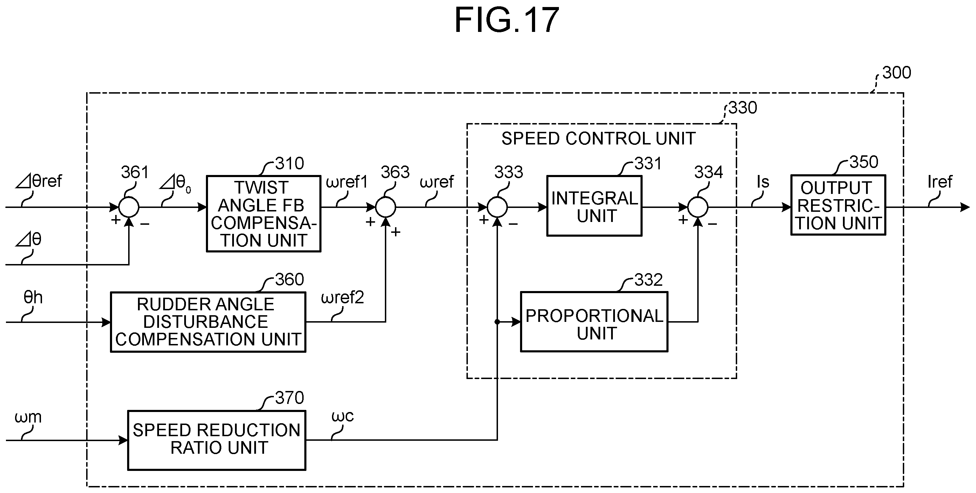

The twist angle control unit 300 of the first embodiment (refer to FIG. 5) will be described below with reference to FIG. 17.

FIG. 17 is a block diagram illustrating an exemplary configuration of the twist angle control unit of the first embodiment. The twist angle control unit 300 calculates the motor current command value Iref based on the target twist angle $\Delta\theta$ref, the twist angle $\Delta\theta$, the steering angle $\theta$h, and the motor angular velocity $\omega$m. The twist angle control unit 300 includes a twist angle feedback (FB) compensation unit 310, a speed control unit 330, a stabilization compensation unit 340, an output restriction unit 350, a rudder angle disturbance compensation unit 360, a subtraction unit 361, an addition unit 363, and a speed reduction ratio unit 370.

The target twist angle $\Delta\theta$ref output from the conversion unit 500 is input to the subtraction unit 361 through addition. The twist angle $\Delta\theta$ is input to the subtraction unit 361 through subtraction. The steering angle $\theta$h is input to the rudder angle disturbance compensation unit 360. The motor angular velocity $\omega$m is input to the stabilization compensation unit 340.

The twist angle FB compensation unit 310 multiplies a deviation $\Delta\theta0$ between the target twist angle $\Delta\theta$ref and the twist angle $\Delta\theta$, which is calculated at the subtraction unit 361, by a compensation value CFB (transfer function) and outputs a target column angular velocity $\omega$ref1 with which the twist angle $\Delta\theta$ follows the target twist angle $\Delta\theta$ref. The target column angular velocity $\omega$ref1 is output to the addition unit 363 through addition. The compensation value CFB may be a simple gain Kpp, or a typically used compensation value such as a PI control compensation value.

The rudder angle disturbance compensation unit 360 multiplies the steering angle $\theta$h by a compensation value Ch (transfer function) and outputs a target column angular velocity wref2. The target column angular velocity wref2 is output to the addition unit 363 through addition.

The addition unit 363 adds the target column angular velocity $\omega$ref1 and the target column angular velocity $\omega$ref2, and outputs a result of the addition as a target column angular velocity wref to the speed control unit 330. Accordingly, it is possible to reduce influence on the torsion bar twist angle $\Delta\theta$ due to change of the steering angle $\theta h$ input by the driver, thereby improving the capability of the twist angle $\Delta\theta$ to follow the target twist angle $\Delta\theta ref$ in response to abrupt steering.

When the steering angle $\theta h$ changes in response to steering by the driver, the change of the steering angle $\theta h$ affects the twist angle $\Delta\theta$ as disturbance, and error occurs to the target twist angle $\Delta\theta ref$. In particular, upon abrupt steering, significant error occurs to the target twist angle $\Delta\theta ref$ due to change of the steering angle $\theta h$. A basic purpose of the rudder angle disturbance compensation unit 360 is to reduce influence of the steering angle $\theta h$ as disturbance.

The speed control unit 330 calculates, through I-P control (proportional preceding PI control), a motor current command value Is with which a column angular velocity $\omega c$ follows the target column angular velocity $\omega ref$. The column angular velocity $\omega c$ may be a value obtained by multiplying the motor angular velocity $\omega m$ by a speed reduction ratio 1/N of the speed reduction ratio unit 370 as a deceleration mechanism as illustrated in FIG. 17.

A subtraction unit 333 calculates the difference between ($\omega ref - \omega c$) the target column angular velocity $\omega ref$ and the column angular velocity $\omega c$. An integral unit 331 integrates the difference between ($\omega ref - \omega c$) the target column angular velocity $\omega ref$ and the column angular velocity $\omega c$ and inputs a result of the integration to a subtraction unit 334 through addition.

A twist angular velocity $\omega t$ is also output to a proportional unit 332. The proportional unit 332 performs proportional processing with a gain Kvp on the column angular velocity $\omega c$ and inputs a result of the proportional processing to the subtraction unit 334 through subtraction. A result of the subtraction at the subtraction unit 334 is output as the motor current command value Is. Note that, the speed control unit 330 may calculate the motor current command value Is not by I-P control but by a typically used control method such as PI control, P (proportional) control, PID (proportional-integral-differential) control, PI-D control (differential preceding PID control), model matching control, or model reference control.

The upper and lower limit values of the motor current command value Is are set in advance at the output restriction unit 350. The motor current command value Iref is output with restriction on the upper and lower limit values of the motor current command value Is.

Note that, the configuration of the twist angle control unit 300 in the present embodiment is exemplary and may be different from the configuration illustrated in FIG. 17. For example, the twist angle control unit 300 may not include the rudder angle disturbance compensation unit 360, the addition unit 363, nor the speed reduction ratio unit 370.

(Second embodiment)

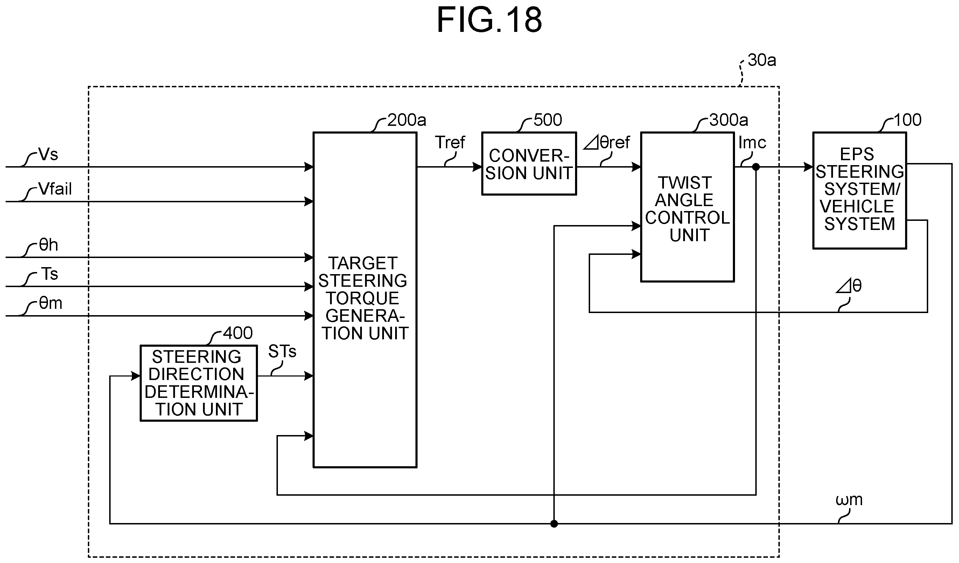

FIG. 18 is a diagram illustrating an exemplary internal block configuration of a control unit according to a second embodiment. Note that, a component same as that in the configuration described above in the first embodiment is denoted by the same reference sign and duplicate description thereof is omitted. A control unit (ECU) 30a according to the second embodiment is different from that of the first embodiment in the configurations of a target steering torque generation unit 200a and a twist angle control unit 300a.

The steering torque Ts and a motor angle $\theta m$ in addition to the steering angle $\theta h$, the vehicle speed Vs, and the vehicle speed determination signal Vfail are input to the target steering torque generation unit 200a.

The twist angle control unit 300a calculates a motor current command value Imc with which the twist angle $\Delta\theta$ is equal to the target twist angle $\Delta\theta ref$. The motor 20 is driven by the motor current command value Imc.

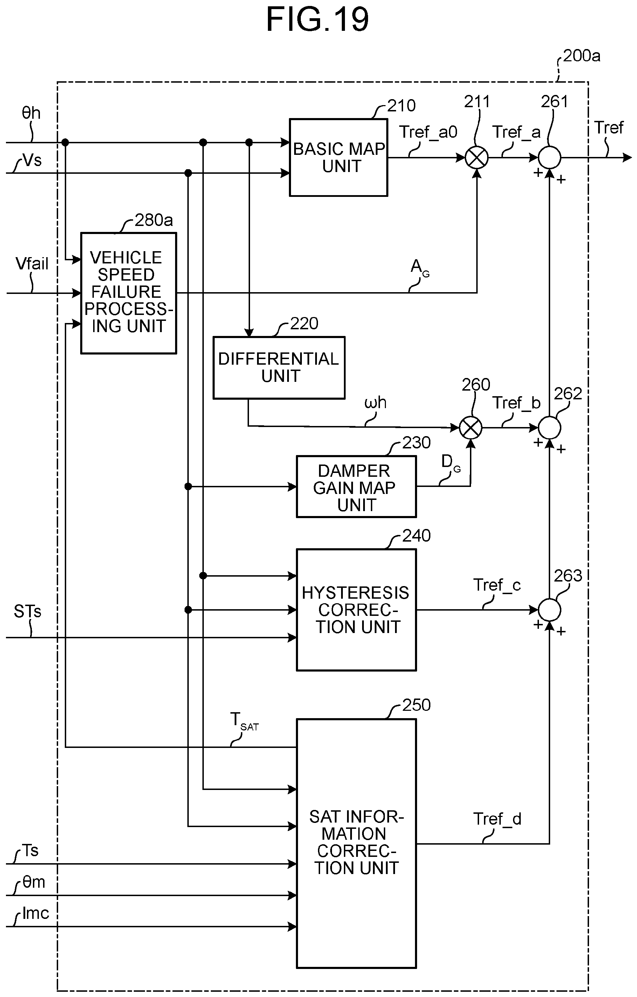

FIG. 19 is a block diagram illustrating an exemplary configuration of the target steering torque generation unit of the second embodiment. As illustrated in FIG. 19, the target steering torque generation unit 200a of the second embodiment includes the SAT information correction unit 250 and an addition unit 263 in addition to the configuration described in the first embodiment. In addition, the target steering torque generation unit 200a is different from that of the first embodiment in the configuration of a vehicle speed failure processing unit 280a.

The steering angle $\theta h$, the vehicle speed Vs, the steering torque Ts, the motor angle $\theta m$, and the motor current command value Imc are input to the SAT information correction unit 250. The SAT information correction unit 250 calculates self-aligning torque (SAT) based on the steering torque Ts, the motor angle $\theta m$, and the motor current command value Imc and further provides filter processing, gain multiplication, and restriction processing to calculate a torque signal (first torque signal) Tref_d.

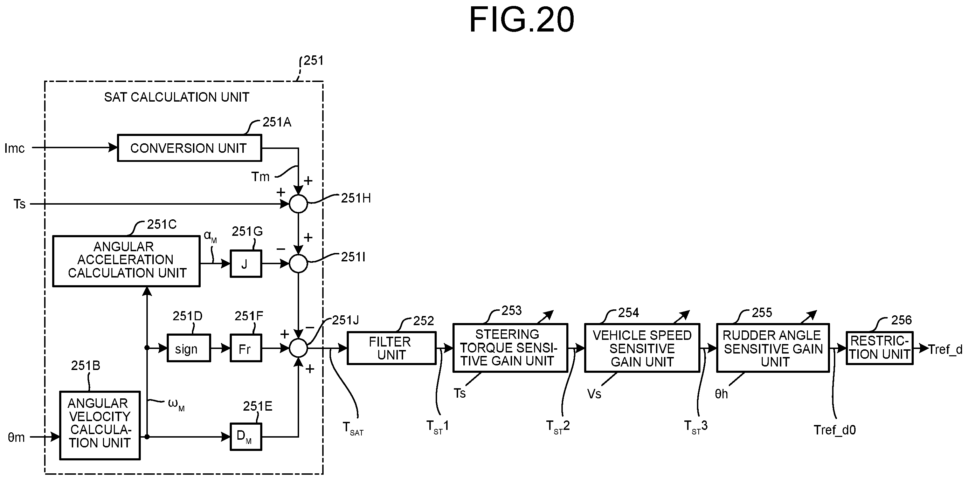

FIG. 20 is a block diagram illustrating an exemplary configuration of the SAT information correction unit. The SAT information correction unit 250 includes a SAT calculation unit 251, a filter unit 252, a steering torque sensitive gain unit 253, a vehicle speed sensitive gain unit 254, a rudder angle sensitive gain unit 255, and a restriction unit 256.

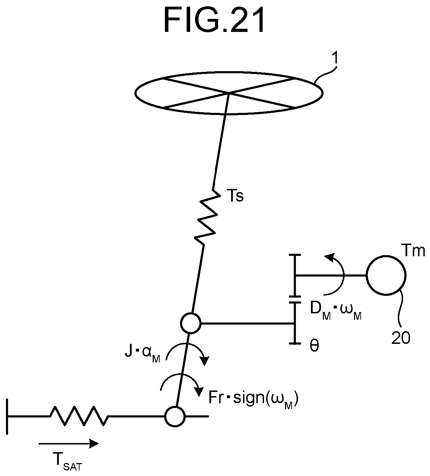

The status of torque generated between a road surface and steering will be described below with reference to FIG. 21. FIG. 21 is a schematic diagram illustrating the status of torque generated between the road surface and steering.

The steering torque Ts is generated as the driver steers the wheel, and the motor 20 generates assist torque (motor torque) Tm in accordance with the steering torque Ts. As a result, the wheel is rotated, self-aligning torque $T_{SAT}$ is generated as reaction force. In this case, torque as resistance against wheel steering is generated by column-shaft conversion inertia (inertia that acts on the column shaft by the motor 20 (rotor thereof), the deceleration mechanism, and the like) J and friction (static friction) Fr. In addition, physical torque (viscosity torque) expressed as a damper term (damper coefficient $D_M$) is generated by the rotational speed of the motor 20. The equation of motion in Expression (12) below is obtained from balancing among these forces.

$$J \times \alpha_M + Fr \times sign(\omega_M) + D_M \times \omega_M = Tm + Ts + T_{SAT} \qquad (12)$$

In Expression (12) above, $\omega_M$ is a motor angular velocity subjected to column-shaft conversion (conversion into a value for the column shaft), and $\alpha_M$ is a motor angular acceleration subjected to column-shaft conversion. When Expression (12) above is solved for $T_{SAT}$, Expression (13) below is obtained.

$$T_{SAT} = -Tm - Ts + J \times \alpha_M + Fr \times sign(\omega_M) + D_M \times \omega_M \qquad (13)$$

As understood from Expression (13) above, when the column-shaft conversion inertia J, the static friction Fr, and the damper coefficient $D_M$ are determined as constants in advance, the self-aligning torque $T_{SAT}$ can be calculated from the motor angular velocity $\omega_M$, the motor angular acceleration $\alpha_M$, the assist torque Tm, and the steering torque Ts. Note that, for simplification, the column-shaft conversion inertia J may be a value converted for the column shaft by using a relational expression of motor inertia and a speed reduction ratio.

The steering torque Ts, the motor angle θm, and the motor current command value Imc are input to the SAT calculation unit 251. The SAT calculation unit 251 calculates the self-aligning torque $T_{SAT}$ by using Expression (13) above. The SAT calculation unit 251 includes a conversion unit 251A, an angular velocity calculation unit 251B, an angular acceleration calculation unit 251C, a block 251D, a block 251E, a block 251F, a block 251G, and adders 251H, 251I, and 251J.

The motor current command value Imc is input to the conversion unit 251A. The conversion unit 251A calculates the assist torque Tm subjected to column-shaft conversion through multiplication by a predetermined gear ratio and a predetermined torque constant.

The motor angle θm is input to the angular velocity calculation unit 251B. The angular velocity calculation unit 251B calculates the motor angular velocity $\omega_M$ subjected to column-shaft conversion through differential processing and gear ratio multiplication.

The motor angular velocity $\omega_M$ is input to the angular acceleration calculation unit 251C. The angular acceleration calculation unit 251C calculates the motor angular acceleration $\alpha_M$ subjected to column-shaft conversion by differentiating the motor angular velocity $\omega_M$.

Then, the self-aligning torque $T_{SAT}$ is calculated with a configuration as illustrated in FIG. 21 based on Math. 8 by the block 251D, the block 251E, the block 251F, the block 251G, and the adders 251H, 251I, and 251J by using the input steering torque Ts and the assist torque Tm, the motor angular velocity $\omega_M$, and the motor angular acceleration $\alpha_M$ thus calculated.

The motor angular velocity $\omega_M$ output from the angular velocity calculation unit 251B is input to the block 251D. The block 251D functions as a sign function and outputs the sign of the input data.

The motor angular velocity $\omega_M$ output from the angular velocity calculation unit 251B is input to the block 251E. The block 251E multiplies the input data by the damper coefficient $D_M$ and outputs a result of the multiplication.

The block 251F multiplies the input data from the block 251D by the static friction Fr and outputs a result of the multiplication.

The motor angular acceleration $\alpha_M$ output from the angular acceleration calculation unit 251C is input to the block 251G. The block 251G multiplies the input data by the column-shaft conversion inertia J and outputs a result of the multiplication.

The adder 251H adds the steering torque Ts and the assist torque Tm output from the conversion unit 251A.

The adder 251I subtracts the output from the block 251G from the output from the adder 251H.

The adder 251J adds the output from the block 251E and the output from the block 251F and subtracts the output from the adder 251I.

With the above-described configuration, Expression (13) above can be achieved. Specifically, the self-aligning torque $T_{SAT}$ is calculated by the configuration of the SAT calculation unit 251 illustrated in FIG. 21.

Note that, when the column angle can be directly detected, the column angle may be used as angle information in place of the motor angle θm. In this case, column-shaft conversion is unnecessary. In addition, a signal obtained by subjected the motor angular velocity ωm from the EPS steering system/vehicle system 100 to column-shaft conversion may be input as the motor angular velocity $\omega_M$ in place of the motor angle θm, and the differential processing on the motor angle θm may be omitted. Moreover, the self-aligning torque $T_{SAT}$ may be calculated by a method other than that described above or may be a measured value, not a calculated value.

To utilize the self-aligning torque $T_{SAT}$ calculated at the SAT calculation unit 251 and appropriately convey the self-aligning torque $T_{SAT}$ to the driver as a steering feeling, information desired to be conveyed is extracted from the self-aligning torque $T_{SAT}$ by the filter unit 252, the amount of conveyance is adjusted by the steering torque sensitive gain unit 253, the vehicle speed sensitive gain unit 254, and the rudder angle sensitive gain unit 255, and the upper and lower limit values thereof are further adjusted by the restriction unit 256.

The self-aligning torque $T_{SAT}$ from the SAT calculation unit 251 is input to the filter unit 252. The filter unit 252 performs filter processing on the self-aligning torque $T_{SAT}$ through, for example, a bandpass filter and outputs SAT information $T_{ST}1$.

The SAT information $T_{ST}1$ output from the filter unit 252 and the steering torque Ts are input to the steering torque sensitive gain unit 253. The steering torque sensitive gain unit 253 sets a steering torque sensitive gain.

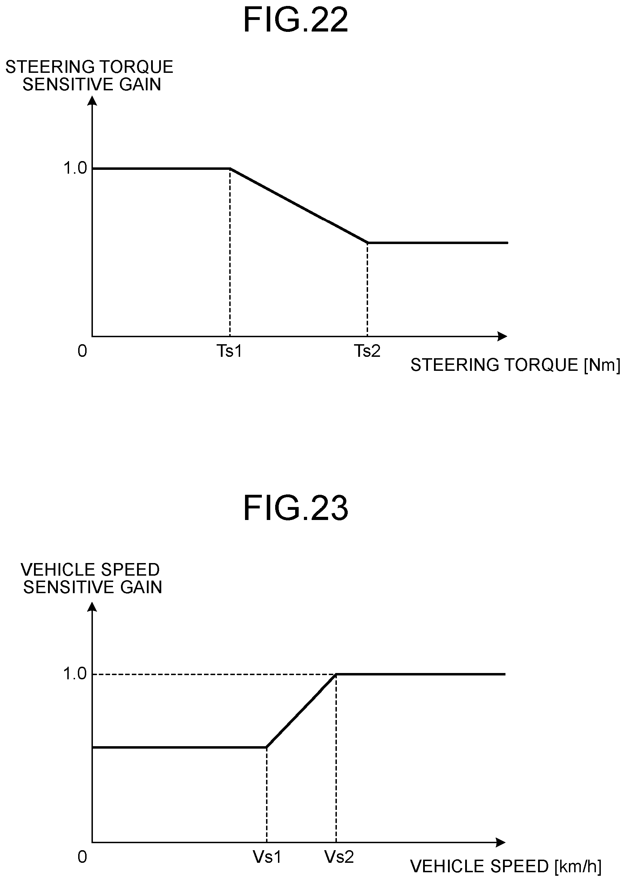

FIG. 22 is a diagram illustrating exemplary characteristics of the steering torque sensitive gain. As illustrated in FIG. 22, the steering torque sensitive gain unit 253 sets the steering torque sensitive gain so that sensitivity is high at on-center vicinity corresponding to a straight traveling state. The steering torque sensitive gain unit 253 multiplies the SAT information $T_{ST}1$ by the steering torque sensitive gain set in accordance with the steering torque Ts and outputs SAT information $T_{ST}2$.

FIG. 22 illustrates an example in which the steering torque sensitive gain is fixed at 1.0 when the steering torque Ts is equal to or smaller than Ts1 (for example, 2 Nm), fixed at a value smaller than 1.0 when the steering torque Ts is equal to or larger than Ts2 (> Ts1) (for example, 4 Nm), or set to decrease at a constant ratio when the steering torque Ts is between Ts1 and Ts2.

The SAT information $T_{ST}2$ output from the steering torque sensitive gain unit 253 and the vehicle speed Vs are input to the vehicle speed sensitive gain unit 254. The vehicle speed sensitive gain unit 254 sets a vehicle speed sensitive gain.

FIG. 23 is a diagram illustrating exemplary characteristics of the vehicle speed sensitive gain. As illustrated in FIG. 23, the vehicle speed sensitive gain unit 254 sets the vehicle speed sensitive gain so that sensitivity at fast travel is high. The vehicle speed sensitive gain unit 254 multiplies the SAT information $T_{ST}2$ by the vehicle speed sensitive gain set in accordance with the vehicle speed Vs, and outputs SAT information $T_{ST}3$.

FIG. 23 illustrates an example in which the vehicle speed sensitive gain is fixed at 1.0 when the vehicle speed Vs is equal to or higher than Vs2 (for example, 70 km/h), fixed at a value smaller than 1.0 when the vehicle speed Vs is equal to or smaller than Vs1 (<Vs2) (for example, 50 km/h), or set to increase at a constant ratio when the vehicle speed Vs is between Vs1 and Vs2.

The SAT information $T_{ST}3$ output from the vehicle speed sensitive gain unit 254 and the steering angle θh are input to the rudder angle sensitive gain unit 255. The rudder angle sensitive gain unit 255 sets a rudder angle sensitive gain.

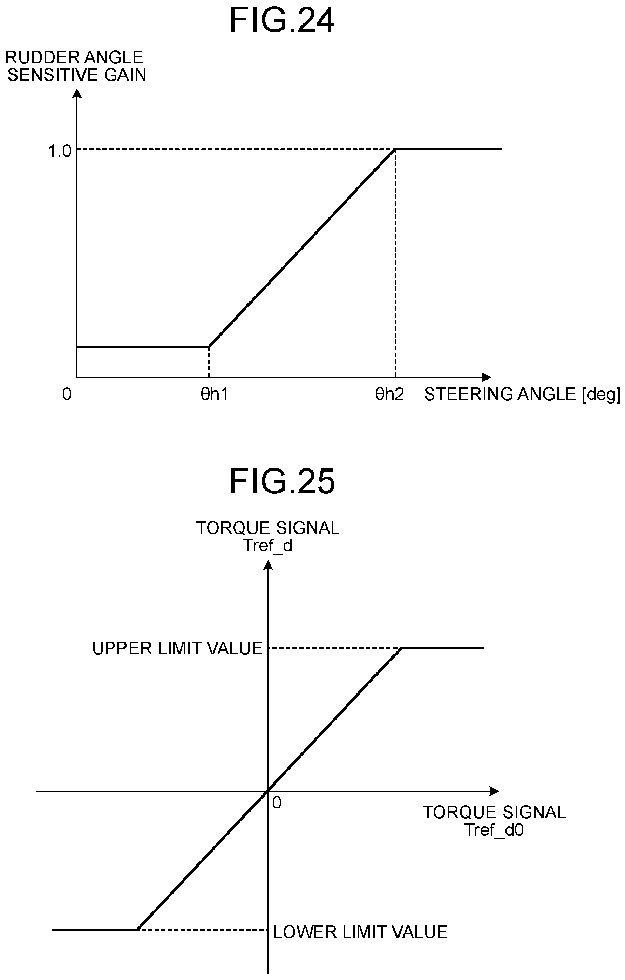

FIG. 24 is a diagram illustrating exemplary characteristics of the rudder angle sensitive gain. As illustrated in FIG. 24, the rudder angle sensitive gain unit 255 sets the rudder angle sensitive gain to start acting at a predetermined steering angle and have high sensitivity when the steering angle is large. The rudder angle sensitive gain unit 255 multiplies the SAT information $T_{ST}3$ by the rudder angle sensitive gain set in accordance with the steering angle θh, and outputs a torque signal Tref_d0.

FIG. 24 illustrates an example in which the rudder angle sensitive gain is a predetermined gain value Gα when the steering angle θh is equal to or smaller than θh1 (for example, 10 deg), fixed at 1.0 when the steering angle θh is equal to or larger than θh2 (for example, 30 deg), or set to increase at a constant ratio when the steering angle θh is between θh1 and θh2. To have high sensitivity when the steering angle θh is large, Gα may be set to be in the range of $0 \leq G\alpha < 1$. To have high sensitivity when the steering angle θh is small, Gα may be set to be in the range of $1 < G\alpha$ although not illustrated. To avoid sensitivity change due to the steering angle θh, Gα may be set to be one.

The torque signal Tref_d0 output from the rudder angle sensitive gain unit 255 is input to the restriction unit 256. The upper and lower limit values of the torque signal Tref_d0 are set to the restriction unit 256.

FIG. 25 is a diagram illustrating exemplary setting of the upper and lower limit values of the torque signal at the restriction unit. As illustrated in FIG. 25, the upper and lower limit values of the torque signal Tref_d0 are set to the restriction unit 256 in advance, and the restriction unit 256 outputs, as a torque signal Tref_d, the upper limit value when the torque signal Tref_d0 that is input is equal to or larger than the upper limit value, the lower limit value when the torque signal Tref_d0 that is input is equal to or smaller than the lower limit value, or the torque signal Tref_d0 otherwise.

Note that, the steering torque sensitive gain, the vehicle speed sensitive gain, and the rudder angle sensitive gain may have curved characteristics in place of linear characteristics as illustrated in FIGS. 22, 23, and 24. In addition, settings of the steering torque sensitive gain, the vehicle speed sensitive gain, and the rudder angle sensitive gain may be adjusted as appropriate in accordance with a steering feeling. In addition, the restriction unit 256 may be omitted, for example, when the magnitude of a torque signal is not likely to increase or is prevented by another means. The steering torque sensitive gain unit 253, the vehicle speed sensitive gain unit 254, and the rudder angle sensitive gain unit 255 may also be omitted as appropriate. In addition, installation positions of the steering torque sensitive gain, the vehicle speed sensitive gain, and the rudder angle sensitive gain may be interchanged. In addition, for example, the steering torque sensitive gain, the vehicle speed sensitive gain, and the rudder angle sensitive gain may be determined in parallel and used to multiply the SAT information $T_{ST}1$ at one component.

Thus, the configuration of the SAT information correction unit 250 in the present embodiment is exemplary and may be different from the configuration illustrated in FIG. 20.

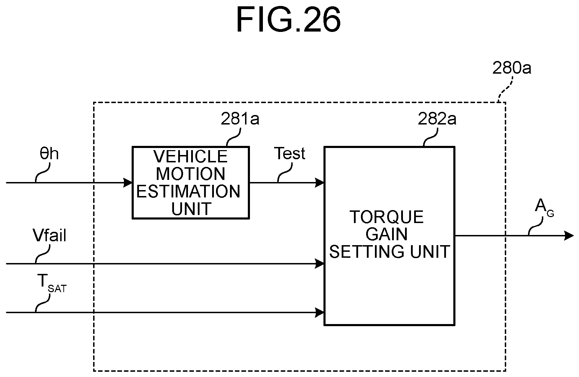

FIG. 26 is a block diagram illustrating an exemplary configuration of the vehicle speed failure processing unit of the second embodiment. The vehicle speed failure processing unit 280a of the second embodiment includes a vehicle motion estimation unit 281a and a torque gain setting unit 282a.

The present embodiment describes an example in which the self-aligning torque $T_{SAT}$ calculated by the SAT calculation unit 251 described above is input as the physical quantity generated through turning motion of the vehicle.

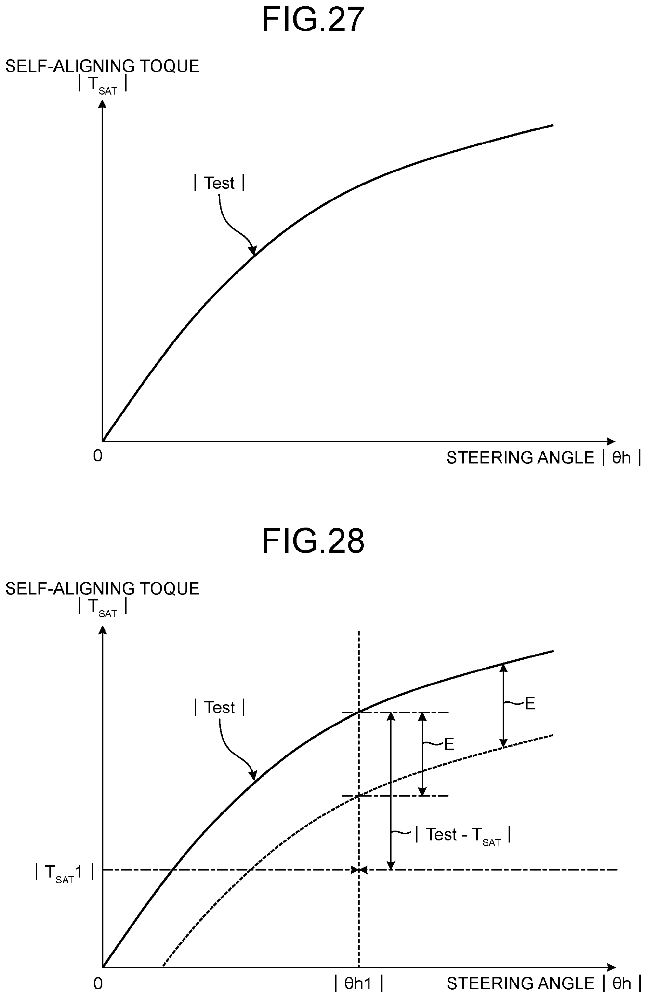

The steering angle θh is input to the vehicle motion estimation unit 281a. The vehicle motion estimation unit 281a holds an estimated self-aligning torque map representing the relation between the steering angle θh and the self-aligning torque $T_{SAT}$ at the alternative speed (for example, 100 [km/h]). FIG. 27 is a diagram illustrating exemplary characteristics of the estimated self-aligning torque map held by the vehicle motion estimation unit of the second embodiment. Note that, instead of the estimated self-aligning torque map illustrated in FIG. 27, for example, an expression representing the relation between the steering angle θh and the self-aligning torque $T_{SAT}$ at the alternative speed may be used for the relation between the steering angle θh and the self-aligning torque $T_{SAT}$.

The vehicle motion estimation unit 281a outputs estimated self-aligning torque Test in accordance with the steering angle θh by using the estimated self-aligning torque map (or the expression representing the relation between the steering angle θh and the self-aligning torque $T_{SAT}$ at the alternative speed).

The estimated self-aligning torque Test output from the vehicle motion estimation unit 281a, the vehicle speed determination signal Vfail, and the self-aligning torque $T_{SAT}$ are input to the torque gain setting unit 282a. The torque gain setting unit 282 generates the torque gain $A_G$ based on the estimated self-aligning torque Test, the vehicle speed determination signal Vfail, and the self-aligning torque $T_{SAT}$.

Specifically, the torque gain setting unit 282a determines whether the vehicle speed Vs is normally detected, in other words, whether the vehicle speed Vs is the alternative vehicle speed based on the vehicle speed determination signal Vfail. When the vehicle speed Vs is the alternative vehicle speed, the torque gain setting unit 282a generates the torque gain $A_G$ in accordance with the absolute value |Test - $T_{SAT}$| of the difference between the estimated self-aligning torque Test and the self-aligning torque $T_{SAT}$. In the present embodiment, the torque gain setting unit 282a holds a predetermined threshold value E for the absolute value |Test - $T_{SAT}$| of the difference between the estimated self-aligning torque Test and the self-aligning torque $T_{SAT}$.

FIG. 28 is an explanatory diagram of specific operation at the torque gain setting unit of the second embodiment. In the example illustrated in FIG. 28, a solid line represents the absolute value |Test| of the estimated self-aligning torque Test. In addition, in the example illustrated in FIG. 28, a dashed line represents a value smaller than the absolute value |Test| of the estimated self-aligning torque Test by the predetermined threshold value E.

The torque gain setting unit 282a reduces the torque gain $A_G$ when the vehicle speed Vs is the alternative vehicle speed and the absolute value |Test - $T_{SAT}$| of the difference between the estimated self-aligning torque Test and the self-aligning torque $T_{SAT}$ is equal to or larger than the threshold value E.

In the example illustrated in FIG. 28, the absolute value of the steering angle θh is |θh1| and the absolute value of the self-aligning torque $T_{SAT}$ is |$T_{SAT}$1|. FIG. 28 illustrates an example in which the absolute value |Test - $T_{SAT}$| of the difference between the estimated self-aligning torque Test and the self-aligning torque $T_{SAT}$ is equal to or larger than the threshold value E (|γest - γre| ≥ E).

The torque gain $A_G$ of the second embodiment is expressed in Expression (14) below. In Expression (14) below, a coefficient "D" is a real number equal to or larger than one.

$$A_G = 1/D \qquad\qquad (14)$$

When the vehicle speed Vs is the alternative vehicle speed and |Test - $T_{SAT}$| ≥ E is satisfied, the torque gain setting unit 282a sets the torque gain $A_G$ to be smaller than one. In other words, the coefficient "D" indicated in Expression (14) above is set to be a value larger than one.

Note that, when the vehicle speed Vs is normally detected, the torque gain setting unit 282a sets the torque gain $A_G$ to be one. The torque gain setting unit 282a sets the torque gain $A_G$ to be one also when the vehicle speed Vs is the alternative vehicle speed and the absolute value |Test - $T_{SAT}$| of the difference between the estimated self-aligning torque Test and the self-aligning torque $T_{SAT}$ is smaller than the threshold value E (|Test - $T_{SAT}$| < E). In other words, the coefficient "D" indicated in Expression (14) above is set to be one.

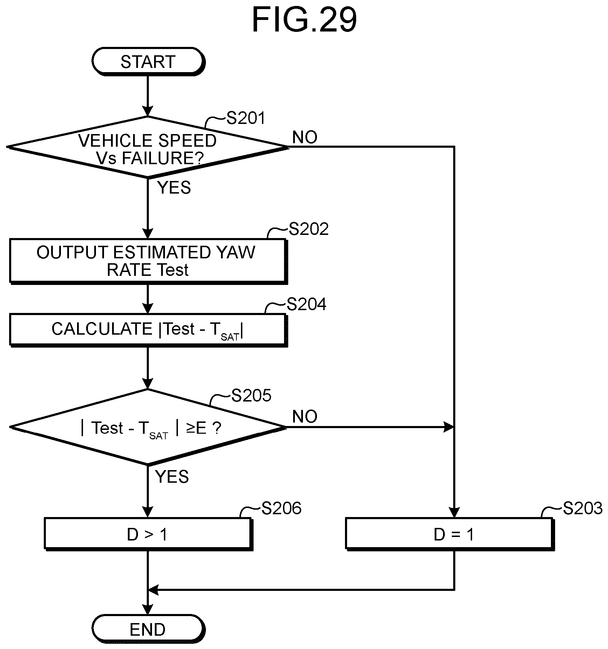

FIG. 29 is a diagram illustrating exemplary processing at the vehicle speed failure processing unit of the second embodiment.

The torque gain setting unit 282a determines whether the vehicle speed Vs is the alternative vehicle speed based on the vehicle speed determination signal Vfail (step S201).

When the vehicle speed Vs is not the alternative vehicle speed (No at step S201), in other words, when the vehicle speed Vs is normally detected, the torque gain setting unit 282a sets the coefficient "D" in the torque gain $A_G$ = 1/D to be one (step S203), and ends the processing.

When the vehicle speed Vs is the alternative vehicle speed (Yes at step S202), the vehicle motion estimation unit 281a outputs the estimated self-aligning torque Test in accordance with the steering angle $\theta$h by using the estimated self-aligning torque map illustrated in, for example, FIG. 27 (step S202).

The torque gain setting unit 282a calculates the absolute value |Test - $T_{SAT}$| of the difference between the estimated self-aligning torque Test and the self-aligning torque $T_{SAT}$ (step S204).

Subsequently, the torque gain setting unit 282a determines whether the absolute value |Test - $T_{SAT}$| of the difference between the estimated self-aligning torque Test and the self-aligning torque $T_{SAT}$ is equal to or larger than the predetermined threshold value E (|Test - $T_{SAT}$| $\geq$ E) (step S205).

When the absolute value |Test - $T_{SAT}$| of the difference between the estimated self-aligning torque Test and the self-aligning torque $T_{SAT}$ is smaller than the threshold value E (|Test - $T_{SAT}$| < E) (No at step S205), the torque gain setting unit 282a sets the coefficient "D" in the torque gain $A_G$ = 1/D to be one (step S203), and ends the processing.

When the absolute value |Test - $T_{SAT}$| of the difference between the estimated self-aligning torque Test and the self-aligning torque $T_{SAT}$ is equal to or larger than the threshold value E (|Test - $T_{SAT}$| $\geq$ E) (Yes at step S205), the torque gain setting unit 282a sets the coefficient "D" in the torque gain $A_G$ = 1/D to be a predetermined value larger than one (step S206), and ends the processing.

The multiplication unit 211 multiplies the torque signal Tref_a0 output from the basic map unit 210 by the torque gain $A_G$ output from the vehicle speed failure processing unit 280a, and outputs a result of the multiplication as the torque signal Tref_a to the addition unit 261.

The torque signals Tref_a, Tref_b, Tref_c, and Tref_d obtained as described above are added at the addition units 261, 262, and 263 and output as the target steering torque Tref.

As described above, effects same as those of the first embodiment can be obtained with a configuration in which the self-aligning torque is employed as the physical quantity generated through turning motion of the vehicle, in place of the yaw rate described in the first embodiment. Specifically, when the vehicle speed failure processing unit 280a of the second embodiment is employed, it is possible to prevent generation of excessive steering torque that causes self-steering during stopping due to assist control in a state in which the vehicle speed sensor 12 fails and the alternative vehicle speed (for example, 100 [km/h]) is output as the vehicle speed Vs.

Note that, the vehicle speed failure processing unit 280 of the first embodiment may be employed in place of the vehicle speed failure processing unit 280a of the second embodiment. In this case, the yaw rate or the lateral acceleration may be employed as the physical quantity generated through turning motion of the vehicle, in place of the self-aligning torque.

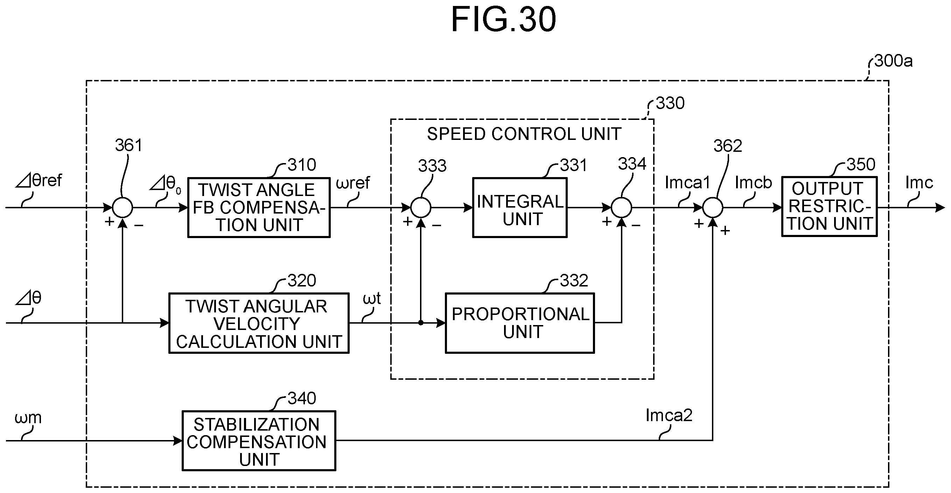

The twist angle control unit 300a of the second embodiment will be described below with reference to FIG. 30.

FIG. 30 is a block diagram illustrating an exemplary configuration of the twist angle control unit of the second embodiment. The twist angle control unit 300a calculates the motor current command value Imc based on the target twist angle $\Delta\theta$ref, the twist angle $\Delta\theta$, and the motor angular velocity $\omega$m. The twist angle control unit 300a includes the twist angle feedback (FB) compensation unit 310, a twist angular velocity calculation unit 320, the speed control unit 330, the stabilization compensation unit 340, the output restriction unit 350, the subtraction unit 361, and an addition unit 362.

The target twist angle $\Delta\theta$ref output from the conversion unit 500 is input to the subtraction unit 361 through addition. The twist angle $\Delta\theta$ is input to the subtraction unit 361 through subtraction and input to the twist angular velocity calculation unit 320. The motor angular velocity $\omega$m is input to the stabilization compensation unit 340.

The twist angle FB compensation unit 310 multiplies the deviation $\Delta\theta$0 between the target twist angle $\Delta\theta$ref and the twist angle $\Delta\theta$, which is calculated at the subtraction unit 361, by the compensation value CFB (transfer function) and outputs a target twist angular velocity $\omega$ref with which the twist angle $\Delta\theta$ follows the target twist angle $\Delta\theta$ref. The compensation value CFB may be a simple gain Kpp, or a typically used compensation value such as a PI control compensation value.

The target twist angular velocity $\omega$ref is input to the speed control unit 330. With the twist angle FB compensation unit 310 and the speed control unit 330, it is possible to cause the twist angle $\Delta\theta$ to follow the target twist angle $\Delta\theta$ref, thereby achieving desired steering torque.

The twist angular velocity calculation unit 320 calculates the twist angular velocity $\omega$t by performing differential arithmetic processing on the twist angle $\Delta\theta$. The twist angular velocity $\omega$t is output to the speed control unit 330. The twist angular velocity calculation unit 320 may perform, as differential calculation, pseudo differentiation with a HPF and a gain. Alternatively, the twist angular velocity calculation unit 320 may calculate the twist angular velocity $\omega$t by another means or not from the twist angle $\Delta\theta$ and may output the calculated twist angular velocity $\omega$t to the speed control unit 330.

The speed control unit 330 calculates, by I-P control (proportional preceding PI control), a motor current command value Imca1 with which the twist angular velocity $\omega$t follows the target twist angular velocity $\omega$ref.

The subtraction unit 333 calculates the difference ($\omega$ref - $\omega$t) between the target twist angular velocity $\omega$ref and the twist angular velocity $\omega$t. The integral unit 331 integrates the difference ($\omega$ref - $\omega$t) between the target twist angular velocity $\omega$ref and the twist angular velocity $\omega$t, and inputs a result of the integration to the subtraction unit 334 through addition.

The twist angular velocity $\omega t$ is also output to the proportional unit 332. The proportional unit 332 performs proportional processing with the gain Kvp on the twist angular velocity $\omega t$ and inputs a result of the proportional processing to the subtraction unit 334 through subtraction. A result of the subtraction at the subtraction unit 334 is output as the motor current command value Imca1. Note that, the speed control unit 330 may calculate the motor current command value Imca1 not by I-P control but by typically used control method such as PI control, P (proportional) control, PID (proportional-integral-differential) control, PI-D control (differential preceding PID control), model matching control, or model reference control.

The stabilization compensation unit 340 has a compensation value Cs (transfer function) and calculates a motor current command value Imca2 from the motor angular velocity $\omega m$. When gains of the twist angle FB compensation unit 310 and the speed control unit 330 are increased to improve the following capability and the disturbance characteristic, a controlled oscillation phenomenon occurs in a higher range. To avoid this, the transfer function (Cs) necessary for stabilization of the motor angular velocity $\omega m$ is set to the stabilization compensation unit 340. Accordingly, stabilization of the entire EPS control system can be achieved.

The addition unit 362 adds the motor current command value Imca1 from the speed control unit 330 and the motor current command value Imca2 from the stabilization compensation unit 340, and outputs a result of the addition as a motor current command value Imcb.

The upper and lower limit values of the motor current command value Imcb are set to the output restriction unit 350 in advance. The output restriction unit 350 outputs the motor current command value Imc with restriction on the upper and lower limit values of the motor current command value Imcb.

Note that, the configuration of the twist angle control unit 300a in the present embodiment is exemplary and may be different from the configuration illustrated in FIG. 30. For example, the twist angle control unit 300a may not include the stabilization compensation unit 340.

(Third embodiment)

Although the present disclosure is applied to a column-type EPS as one vehicle steering device in the first and second embodiments, the present disclosure is not limited to an upstream-type EPS such as a column-type EPS and is applicable to a downstream-type EPS such as a rack-pinion EPS. Moreover, since feedback control is performed based on a target twist angle, the present disclosure is also applicable to, for example, a steer-by-wire (SBW) reaction force device including at least a torsion bar (with an optional spring constant) and a twist angle detection sensor. The following describes an embodiment (third embodiment) when the present disclosure is applied to a SBW reaction force device including a torsion bar.

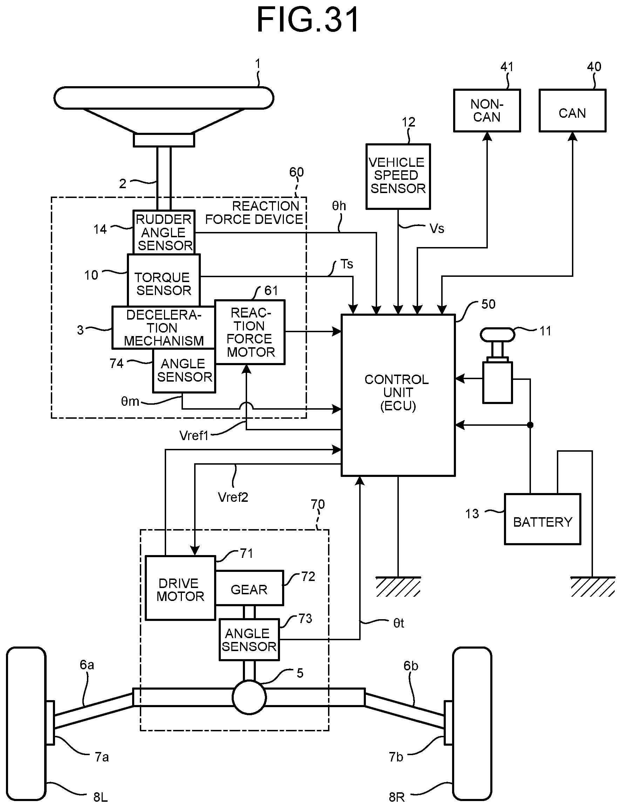

First, the entire SBW system including a SBW reaction force device will be described below. FIG. 31 is a diagram illustrating an exemplary configuration of the SBW system in a manner corresponding to the typical configuration of the electric power steering device illustrated in FIG. 1. Note that, a component same as that in the configuration described above in the first and second embodiments is denoted by the same reference sign and detailed description thereof is omitted.

The SBW system is a system that includes no intermediate shaft mechanically connected with the column shaft 2 at the universal joint 4a in FIG. 1 and conveys an operation of the wheel 1 to a rotation mechanism constituted by the steering wheels 8L and 8R and the like through an electric signal. As illustrated in FIG. 31, the SBW system includes a reaction force device 60 and a drive device 70, and a control unit (ECU) 50 controls the devices. The reaction force device 60 performs detection of the steering angle $\theta h$ at the rudder angle sensor 14 and simultaneously transfers, to the driver as reaction force torque, a motion state of the vehicle conveyed from the steering wheels 8L and 8R. The reaction force torque is generated by a reaction force motor 61. Note that, although some SBW systems include no torsion bar in the reaction force device, a SBW system to which the present disclosure is applied includes a torsion bar, and the steering torque Ts is detected at the torque sensor 10. In addition, an angle sensor 74 detects the motor angle $\theta m$ of the reaction force motor 61. The drive device 70 drives a drive motor 71 in accordance with steering of the wheel 1 by the driver and provides drive power thereof to the pinion rack mechanism 5 through a gear 72 to rotate the steering wheels 8L and 8R through the tie rods 6a and 6b. An angle sensor 73 is disposed near the pinion rack mechanism 5 and detects a turning angle $\theta t$ of the steering wheels 8L and 8R. For cooperative control of the reaction force device 60 and the drive device 70, the ECU 50 generates a voltage control command value Vref1 with which the reaction force motor 61 is driven and controlled and a voltage control command value Vref2 with which the drive motor 71 is driven and controlled, based on, for example, the vehicle speed Vs from the vehicle speed sensor 12 in addition to information such as the steering angle $\theta h$ and the turning angle $\theta t$ output from the devices.

The following describes the configuration of the third embodiment in which the present disclosure is applied to such a SBW system.

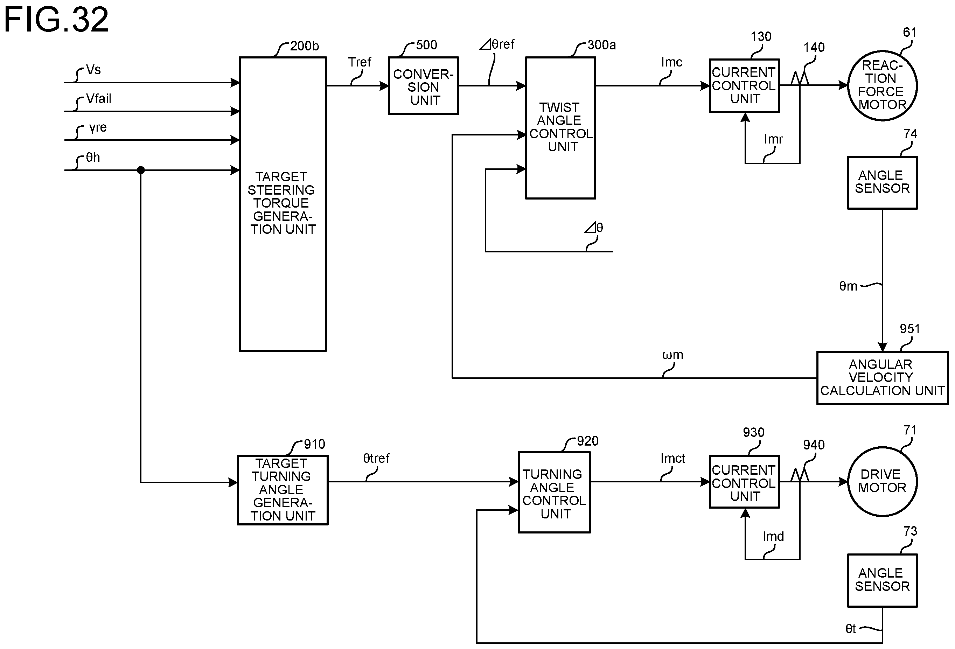

FIG. 32 is a block diagram illustrating the configuration of the third embodiment. In the third embodiment, control (hereinafter referred to as "twist angle control") on the twist angle $\Delta\theta$ and control (hereinafter referred to as "turning angle control") on the turning angle $\theta t$ are performed to control the reaction force device by the twist angle control and to control the drive device by the turning angle control. Note that, the drive device may be controlled by another control method.

A target steering torque generation unit 200b generates the target steering torque Tref based on the vehicle speed Vs, the vehicle speed determination signal Vfail, the steering angle $\theta h$, and the real yaw rate $\gamma re$. The conversion unit 500 converts the target steering torque Tref generated at the target steering torque generation unit 200b into the target twist angle $\Delta\theta ref$. The target twist angle $\Delta\theta ref$ is output to the twist angle control unit 300. In the twist angle control, such control that the twist angle $\Delta\theta$ follows the target twist angle $\Delta\theta ref$ calculated through the target steering torque generation unit 200b and the conversion unit 500 by using the steering angle $\theta h$ and the like is performed with configurations and operations same as those of the second embodiment. The motor angle $\theta m$ is detected at the angle sensor 74, and the motor angular velocity $\omega m$ is calculated by differentiating the motor angle $\theta m$ at an angular velocity calculation unit 951. The turning angle $\theta t$ is detected at the angle sensor 73. In addition, although detailed description is not performed as processing in the EPS steering system/vehicle system 100 in the first embodiment, a current control unit 130 performs current control by driving the reaction force motor 61 based on the motor current command value Imc output from the twist angle control unit 300a and a current value Imr of the reaction force motor 61 detected at a motor current detector 140 with configurations and operations same as those of the subtraction unit 32B, the PI control unit 35, the PWM control unit 36, and the inverter 37 illustrated in FIG. 3.

In the turning angle control, a target turning angle $\theta tref$ is generated based on the steering angle $\theta h$ at a target turning angle generation unit 910, the target turning angle $\theta tref$ together with the turning angle $\theta t$ is input to a turning angle control unit 920, and a motor current command value Imct with which the turning angle $\theta t$ is equal to the target turning angle $\theta tref$ is calculated at the turning angle control unit 920. Then, a current control unit 930 performs current control by driving the drive motor 71 based on the motor current command value Imct and a current value Imd of the drive motor 71 detected at a motor current detector 940 with configurations and operations same as those of the current control unit 130.

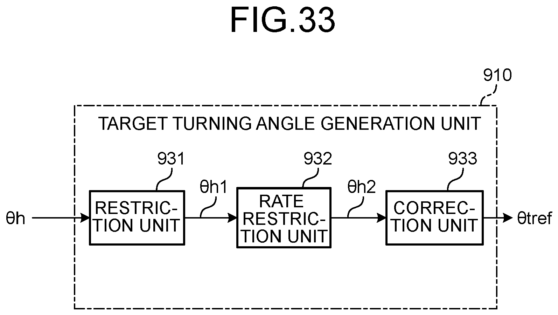

FIG. 33 is a diagram illustrating an exemplary configuration of the target turning angle generation unit. The target turning angle generation unit 910 includes a restriction unit 931, a rate restriction unit 932, and a correction unit 933.

The restriction unit 931 outputs a steering angle $\theta h1$ with restriction on the upper and lower limit values of the steering angle $\theta h$. Similarly to the output restriction unit 350 in the twist angle control unit 300a illustrated in FIG. 30, the upper and lower limit values of the steering angle $\theta h$ are set in advance and restricted.

To avoid abrupt change of the steering angle, the rate restriction unit 932 provides restriction by setting a restriction value for the change amount of the steering angle $\theta h1$, and outputs the steering angle $\theta h2$. For example, the change amount is set to be the difference from the steering angle $\theta h1$ at the previous sample. When the absolute value of the change amount is larger than a predetermined value (restriction value), the steering angle $\theta h1$ is increased or decreased so that the absolute value of the change amount becomes equal to the restriction value, and the increased or decreased steering angle $\theta h1$ is outputs as the steering angle $\theta h2$. When the absolute value of the change amount is equal to or smaller than the restriction value, the steering angle $\theta h1$ is directly output as the steering angle $\theta h2$. Note that, restriction may be provided by setting the upper and lower limit values of the change amount instead of setting the restriction value for the absolute value of the change amount, or restriction may be provided on a change rate or a difference rate in place of the change amount.

The correction unit 933 corrects the steering angle $\theta h2$ and outputs the target turning angle $\theta tref$. For example, as in a case of the basic map unit 210 in the target steering torque generation unit 200b, the target turning angle $\theta tref$ is calculated from the steering angle $\theta h2$ by using a map that defines a characteristic of the target turning angle $\theta tref$ for the magnitude $|\theta h2|$ of the steering angle $\theta h2$. Alternatively, the target turning angle $\theta tref$ may be calculated by simply multiplying the steering angle $\theta h2$ by a predetermined gain.

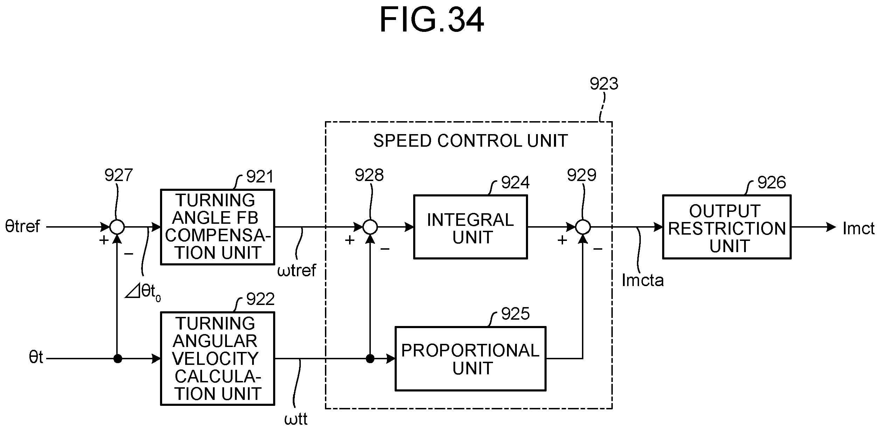

FIG. 34 is a diagram illustrating an exemplary configuration of the turning angle control unit. The configuration of the turning angle control unit 920 is same as the exemplary configuration of the twist angle control unit 300a illustrated in FIG. 30 from which the stabilization compensation unit 340 and the addition unit 362 are removed, the target turning angle $\theta tref$ and the turning angle $\theta t$ are input in place of the target twist angle $\Delta\theta ref$ and the twist angle $\Delta\theta$, and the configurations and operations of a turning angle feedback (FB) compensation unit 921, a turning angular velocity calculation unit 922, a speed control unit 923, an output restriction unit 926, and a subtraction unit 927 are same as those of the twist angle FB compensation unit 310, the twist angular velocity calculation unit 320, the speed control unit 330, the output restriction unit 350, and the subtraction unit 361, respectively.

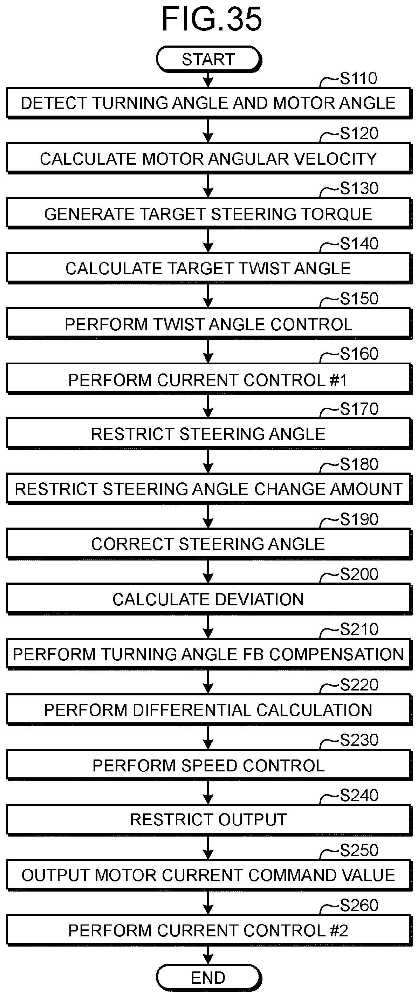

Exemplary operation of the third embodiment in such a configuration will be described below with reference to a flowchart in FIG. 35. FIG. 35 is a flowchart illustrating the exemplary operation of the third embodiment.

Once operation is started, the angle sensor 73 detects the turning angle $\theta t$ and the angle sensor 74 detects the motor angle $\theta m$ (step S110), and the turning angle $\theta t$ and the motor angle $\theta m$ are input to the turning angle control unit 920 and the angular velocity calculation unit 951, respectively.

The angular velocity calculation unit 951 calculates the motor angular velocity $\omega m$ by differentiating the motor angle $\theta m$ and outputs the calculated motor angular velocity $\omega m$ to the twist angle control unit 300a (step S120).

Thereafter, the target steering torque generation unit 200b executes operation same as that at steps S10 to S40 illustrated in FIG. 7 to perform current control by driving the reaction force motor 61 (steps S130 to S160).

In the turning angle control, the target turning angle generation unit 910 receives the steering angle θh, and the steering angle θh is input to the restriction unit 931. The restriction unit 931 restricts the upper and lower limit values of the steering angle θh to upper and lower limit values set in advance (step S170) and outputs the steering angle θh as the steering angle θh1 to the rate restriction unit 932. The rate restriction unit 932 restricts the change amount of the steering angle θh1 based on a restriction value set in advance (step S180) and outputs the steering angle θh1 as the steering angle θh2 to the correction unit 933. The correction unit 933 obtains the target turning angle θtref by correcting the steering angle θh2 (step S190) and outputs the target turning angle θtref to the turning angle control unit 920.

Having received the turning angle θt and the target turning angle θtref, the turning angle control unit 920 calculates a deviation Δθt0 by subtracting the turning angle θt from the target turning angle θtref at the subtraction unit 927 (step S200). The deviation Δθt0 is input to the turning angle FB compensation unit 921, and the turning angle FB compensation unit 921 compensates the deviation Δθt0 by multiplying the deviation Δθt0 by a compensation value (step S210) and outputs a target turning angular velocity ωtref to the speed control unit 923. The turning angular velocity calculation unit 922 receives the turning angle θt, calculates a turning angular velocity wtt through differential calculation on the turning angle θt (step S220) and outputs the turning angular velocity wtt to the speed control unit 923. Similarly to the speed control unit 330, the speed control unit 923 calculates a motor current command value Imcta by I-P control (step S230) and outputs the motor current command value Imcta to the output restriction unit 926. The output restriction unit 926 restricts the upper and lower limit values of the motor current command value Imcta to upper and lower limit values set in advance (step S240) and outputs the motor current command value Imcta as the motor current command value Imct (step S250).

The motor current command value Imct is input to the current control unit 930, and the current control unit 930 performs current control by driving the drive motor 71 based on the motor current command value Imct and the current value Imd of the drive motor 71 detected by the motor current detector 940 (step S260).

Note that, the order of data input, calculation, and the like in FIG. 35 may be changed as appropriate. Similarly to the speed control unit 330 in the twist angle control unit 300a, the speed control unit 923 in the turning angle control unit 920 may perform PI control, P control, PID control, PI-D control, or the like in place of I-P control and only needs to perform any of P control, I control, and D control, and following control at the turning angle control unit 920 and the twist angle control unit 300a may be performed in a typically used control structure. The turning angle control unit 920 is not limited to a control configuration used for a vehicle device but may have any control configuration with which a real angle (in this example, the turning angle θt) follows a target angle (in this example, the target turning angle θtref), and for example, may have a control configuration used for an industrial positioning device, an industrial robot, or the like.

In the third embodiment, one ECU 50 controls the reaction force device 60 and the drive device 70 as illustrated in FIG. 31, but an ECU for the reaction force device 60 and an ECU for the drive device 70 may be provided. In this case, the ECUs perform data transmission and reception through communication. In addition, although the SBW system illustrated in FIG. 31 has no mechanical connection between the reaction force device 60 and the drive device 70, the present disclosure is also applicable to a SBW system including a mechanical torque transmission mechanism configured to mechanically connect the column shaft 2 and the rotation mechanism through a clutch or the like when anomaly has occurred to the system. In such a SBW system, when the system is normal, the clutch is turned off to set mechanical torque transfer to an open state, or when the system is anomalous, the clutch is turned on to set mechanical torque transfer to an enabled state.

The twist angle control units 300 and 300a in the above-described first to third embodiments directly calculate the motor current command value Imc and an assist current command value Iac, but before calculating the motor current command value and the assist current command value, may first calculate motor torque (target torque) to be output. In this case, a typically used relation between motor current and motor torque is used to calculate the motor current command value and the assist current command value from the motor torque.

Note that, the drawings used in the above description are conceptual diagrams for performing qualitative description of the present disclosure, and the present disclosure is not limited to these drawings. The above-described embodiments are preferable examples of the present disclosure, but not limited thereto, and may be modified in various manners without departing from the scope of the present disclosure. The present disclosure is not limited to a torsion bar but may have a mechanism having an optional spring constant between the wheel and the motor or the reaction force motor.

Reference Signs List

    1 wheel
    2 column shaft

2A torsion bar

3 deceleration mechanism

4a, 4b universal joint

5 pinion rack mechanism

6a, 6b tie rod

7a, 7b hub unit

8L, 8R steering wheel

10 torque sensor

11 ignition key

12 vehicle speed sensor

13 battery

14 rudder angle sensor

15 yaw rate sensor

16 lateral acceleration sensor

20 motor

30, 50 control unit (ECU)

60 reaction force device

61 reaction force motor

70 drive device

71 drive motor

72 gear

73 angle sensor

100 EPS steering system/vehicle system

130 current control unit

140 motor current detector

200, 200a target steering torque generation unit

210 basic map unit

211 multiplication unit

220 differential unit

230 damper gain map unit

240 hysteresis correction unit

250 SAT information correction unit

251 SAT calculation unit

251A conversion unit

251B angular velocity calculation unit

251C angular acceleration calculation unit

251D, 251E, 251F block

251H, 251I, 251J adder

252 filter unit

253 steering torque sensitive gain unit

254 vehicle speed sensitive gain unit

255 rudder angle sensitive gain unit

256 restriction unit

260 multiplication unit

261, 262, 263 addition unit

280, 280a vehicle speed failure processing unit

281, 281a vehicle motion estimation unit

282, 282a torque gain setting unit

300, 300a twist angle control unit

310 twist angle feedback (FB) compensation unit

320 twist angular velocity calculation unit

330 speed control unit

331 integral unit

332 proportional unit

333, 334 subtraction unit

340 stabilization compensation unit

350 output restriction unit

360 rudder angle disturbance compensation unit

361 subtraction unit
362, 363 addition unit
370 speed reduction ratio unit
400 steering direction determination unit
500 conversion unit
910 target turning angle generation unit
920 turning angle control unit
921 turning angle feedback (FB) compensation unit
922 turning angular velocity calculation unit
923 speed control unit
926 output restriction unit
927 subtraction unit
930 current control unit
931 restriction unit
933 correction unit
932 rate restriction unit
940 motor current detector
1001 CPU
1005 interface
1006 A/D converter
1007 PWM controller
1100 control computer (MCU)

**Claims**

1. A vehicle steering device configured to assist and control a steering system (100) of a vehicle by driving and controlling a motor configured to assist steering force, comprising:

   a vehicle speed sensor that outputs, as a vehicle speed signal, a pulse signal in accordance with a vehicle speed of the vehicle, wherein
   when the vehicle speed sensor fails and the vehicle speed signal is not normally output, control using a predetermined alternative vehicle speed is performed instead of the vehicle speed signal, and target steering torque is reduced in accordance with the absolute value of the difference between a physical quantity generated through turning motion of the vehicle and an estimated value of the physical quantity at the alternative vehicle speed.

2. The vehicle steering device according to claim 1, comprising:

   a vehicle motion estimation unit (281) configured to estimate the estimated value of the physical quantity in accordance with a steering angle; and
   a torque gain setting unit (282,282a) configured to set a torque gain for the target steering torque in accordance with the absolute value of the difference between the physical quantity and the estimated value of the physical quantity.

3. The vehicle steering device according to claim 2, wherein the torque gain setting unit (282,282a) reduces the torque gain when the vehicle speed is the alternative vehicle speed and the absolute value of the difference between the physical quantity and the estimated value of the physical quantity is equal to or larger than a predetermined threshold value.

4. The vehicle steering device according to claim 2, wherein the torque gain setting unit (282,282a)

   sets the torque gain to be one when the vehicle speed is not the alternative vehicle speed and the absolute value of the difference between the physical quantity and the estimated value of the physical quantity is smaller than a predetermined threshold value, and
   sets the torque gain to be a value smaller than one when the vehicle speed is the alternative vehicle speed and the absolute value of the difference between the physical quantity and the estimated value of the physical quantity is equal to or larger than the threshold value.

**5.** The vehicle steering device according to claim 4, wherein the torque gain setting unit (282,282a) gradually reduces the torque gain to the set value when the vehicle speed is the alternative vehicle speed and the absolute value of the difference between the physical quantity and the estimated value of the physical quantity is equal to or larger than the threshold value.

**6.** The vehicle steering device according to any one of claims 2 to 5, wherein

the physical quantity is a yaw rate, and
the vehicle motion estimation unit (281) estimates an estimated yaw rate in accordance with the steering angle.

**7.** The vehicle steering device according to any one of claims 2 to 5, wherein

the physical quantity is lateral acceleration, and
the vehicle motion estimation unit (281) estimates an estimated lateral acceleration in accordance with the steering angle.


**Patentansprüche**

**1.** Eine Fahrzeuglenkvorrichtung, die dazu eingerichtet ist, ein Lenksystem (100) eines Fahrzeugs durch Antrieb und Steuerung eines Motors zu unterstützen und zu steuern, der dazu eingerichtet ist, die Lenkkraft zu unterstützen, umfassend:

einen Fahrzeuggeschwindigkeitssensor, der als Fahrzeuggeschwindigkeitssignal ein Impulssignal entsprechend einer Fahrzeuggeschwindigkeit des Fahrzeugs ausgibt, wobei
bei Ausfall des Fahrzeuggeschwindigkeitssensors und bei nicht normaler Ausgabe des Fahrzeuggeschwindigkeitssignals anstelle des Fahrzeuggeschwindigkeitssignals eine Steuerung unter Verwendung einer vorbestimmten alternativen Fahrzeuggeschwindigkeit durchgeführt wird und das Soll-Lenkdrehmoment entsprechend dem Absolutwert der Differenz zwischen einer durch die Drehbewegung des Fahrzeugs erzeugten physikalischen Größe und einem Schätzwert der physikalischen Größe bei der alternativen Fahrzeuggeschwindigkeit reduziert wird.

**2.** Die Fahrzeuglenkvorrichtung nach Anspruch 1, umfassend:

eine Fahrzeugbewegungsschätzeinheit (281), die dazu eingerichtet ist, den geschätzten Wert der physikalischen Größe in Übereinstimmung mit einem Lenkwinkel zu schätzen; und
eine Drehmomentverstärkungseinstelleinheit (282, 282a), die dazu eingerichtet ist, eine Drehmomentverstärkung für das Ziellenkdrehmoment in Übereinstimmung mit dem absoluten Wert der Differenz zwischen der physikalischen Größe und dem geschätzten Wert der physikalischen Größe einzustellen.

**3.** Die Fahrzeuglenkvorrichtung nach Anspruch 2, wobei die Drehmomentverstärkungseinstelleinheit (282, 282a) die Drehmomentverstärkung verringert, wenn die Fahrzeuggeschwindigkeit die alternative Fahrzeuggeschwindigkeit ist und der Absolutwert der Differenz zwischen der physikalischen Größe und dem Schätzwert der physikalischen Größe gleich oder größer als ein vorbestimmter Schwellenwert ist.

**4.** Die Fahrzeuglenkvorrichtung nach Anspruch 2, wobei die Drehmomentverstärkungseinstelleinheit (282, 282a)

die Drehmomentverstärkung auf eins einstellt, wenn die Fahrzeuggeschwindigkeit nicht die alternative Fahrzeuggeschwindigkeit ist und der Absolutwert der Differenz zwischen der physikalischen Größe und dem Schätzwert der physikalischen Größe kleiner als ein vorbestimmter Schwellenwert ist, und
die Drehmomentverstärkung auf einen Wert kleiner als eins setzt, wenn die Fahrzeuggeschwindigkeit die alternative Fahrzeuggeschwindigkeit ist und der absolute Wert der Differenz zwischen der physikalischen Größe und dem geschätzten Wert der physikalischen Größe gleich oder größer als der Schwellenwert ist.

**5.** Die Fahrzeuglenkvorrichtung nach Anspruch 4, wobei die Drehmomentverstärkungseinstelleinheit (282, 282a) die Drehmomentverstärkung allmählich auf den eingestellten Wert reduziert, wenn die Fahrzeuggeschwindigkeit die alternative Fahrzeuggeschwindigkeit ist und der Absolutwert der Differenz zwischen der physikalischen Größe und dem Schätzwert der physikalischen Größe gleich dem Schwellenwert oder größer ist.

**6.** Die Fahrzeuglenkvorrichtung nach einem der Ansprüche 2 bis 5, wobei

die physikalische Größe eine Gierrate ist und
die Fahrzeugbewegungsschätzeinheit (281) eine geschätzte Gierrate in Übereinstimmung mit dem Lenkwinkel schätzt.

**7.** Die Fahrzeuglenkvorrichtung gemäß einem der Ansprüche 2 bis 5, wobei

die physikalische Größe eine Querbeschleunigung ist und
die Fahrzeugbewegungsschätzeinheit (281) eine geschätzte Querbeschleunigung in Übereinstimmung mit dem Lenkwinkel schätzt.

**Revendications**

**1.** Dispositif de direction de véhicule conçu pour assister et commander un système de direction (100) d'un véhicule en entraînant et en commandant un moteur conçu pour fournir une force de direction assistée, comprenant :

un capteur de vitesse de véhicule qui émet, en tant que signal de vitesse de véhicule, un signal d'impulsion selon la vitesse du véhicule, étant entendu que
lorsque le capteur de vitesse du véhicule est défectueux et que le signal de vitesse du véhicule n'est pas émis normalement, il est réalisé une commande à l'aide d'une vitesse prédéterminée du véhicule qui est différente de celle du signal de vitesse du véhicule, et un couple de direction cible est réduit selon la valeur absolue de la différence entre une quantité physique générée par un déplacement en virage du véhicule et une valeur estimée de la quantité physique à ladite vitesse différente du véhicule.

**2.** Dispositif de direction de véhicule selon la revendication 1, comprenant :

une unité d'estimation de déplacement du véhicule (281) conçue pour estimer ladite valeur estimée de la quantité physique selon un angle de direction, et
une unité de définition de gain de couple (282, 282a) conçue pour définir un gain de couple propre au couple de direction cible selon la valeur absolue de la différence entre la quantité physique et la valeur estimée de la quantité physique.

**3.** Dispositif de direction de véhicule selon la revendication 2, dans lequel l'unité de définition de gain de couple (282, 282a) réduit le gain de couple lorsque la vitesse du véhicule est ladite vitesse différente du véhicule et que la valeur absolue de la différence entre la quantité physique et la valeur estimée de la quantité physique est supérieure ou égale à une valeur seuil prédéterminée.

**4.** Dispositif de direction de véhicule selon la revendication 2, dans lequel l'unité de définition de gain de couple (282, 282a)

définit le gain de couple à un lorsque la vitesse du véhicule n'est pas ladite vitesse différente du véhicule et que la valeur absolue de la différence entre la quantité physique et la valeur estimée de la quantité physique est inférieure à une valeur seuil prédéterminée, et
définit le gain de couple à une valeur inférieure à un lorsque la vitesse du véhicule est ladite vitesse différente du véhicule et que la valeur absolue de la différence entre la quantité physique et la valeur estimée de la quantité physique est supérieure ou égale à la valeur seuil.

**5.** Dispositif de direction de véhicule selon la revendication 4, dans lequel l'unité de définition de gain de couple (282, 282a) réduit progressivement le gain de couple jusqu'à la valeur définie lorsque la vitesse du véhicule est ladite vitesse différente du véhicule et que la valeur absolue de la différence entre la quantité physique et la valeur estimée de la quantité physique est supérieure ou égale à la valeur seuil.

**6.** Dispositif de direction de véhicule selon l'une quelconque des revendications 2 à 5, dans lequel

la quantité physique est une vitesse de lacet, et
l'unité d'estimation de déplacement de véhicule (281) estime une vitesse de lacet estimée selon l'angle de direction.

7. Dispositif de direction de véhicule selon l'une quelconque des revendications 2 à 5, dans lequel

la quantité physique est une accélération latérale, et
l'unité d'estimation de déplacement de véhicule (281) estime une accélération latérale estimée selon l'angle de direction.

# FIG.1

# FIG.2

# FIG.3

EP 3 892 523 B1

# FIG.4

Ts

1

2

RUDDER ANGLE SENSOR θh

UPPER ANGLE SENSOR $\theta_1$

2A

LOWER ANGLE SENSOR $\theta_2$

20

DETECTED CURRENT VALUE Im

8L

8R

ROAD SURFACE REACTION FORCE Rr,
ROAD SURFACE INFORMATION μ

FIG.5

# FIG.6

MOTOR ANGULAR VELOCITY $\omega_m$

RIGHT STEERING
(LEFT BACKWARD
STEERING)

RIGHT STEERING
(RIGHT FORWARD
STEERING)

STEERING ANGLE $\theta h$

0

LEFT STEERING
(LEFT FORWARD
STEERING)

LEFT STEERING
(RIGHT BACKWARD
STEERING)

# FIG.7

START

GENERATE TARGET STEERING
TORQUE Tref ~S10

CONVERT TARGET STEERING
TORQUE Tref INTO TWIST ANGLE
$\Delta\theta$ref ~S20

CALCULATE MOTOR CURRENT
COMMAND VALUE Iref ~S30

PERFORM CURRENT CONTROL ~S40

END

FIG.8

# FIG.9

TORQUE SIGNAL
Tref_a0

HIGH VEHICLE SPEED

MIDDLE VEHICLE SPEED

LOW VEHICLE SPEED

0                                    STEERING ANGLE | θh |

# FIG.10

DAMPER GAIN
$D_G$

0                                    VEHICLE SPEED Vs

# FIG.11

TORQUE SIGNAL
Tref_c

STEERING ANGLE θh

# FIG.12

# FIG.13

YAW RATE
| γ |

| γest |

0　　　　　　　　　　　　　　　　　STEERING ANGLE | θh |

# FIG.14

YAW RATE
| γ |

| γest |

B

B

| γest -γre |

| γre1 |

Ex

0　　　　　　　　| θh1 |　　　STEERING ANGLE | θh |

# FIG.15

```
                    ┌──────────┐
                    │  START   │
                    └──────────┘
                         │
                         ▼
                    ╱─────────────╲  ⌐S101
            ╱─────────────────────────╲        NO
           ╱  VEHICLE SPEED            ╲──────────────┐
           ╲  Vs FAILURE?              ╱              │
            ╲─────────────────────────╱               │
                    ╲─────────────╱                   │
                         │                            │
                       YES                            │
                         │                            │
                         ▼                            │
          ┌──────────────────────────┐  ⌐S102        │
          │ OUTPUT ESTIMATED YAW RATE │               │
          │           γest           │               │
          └──────────────────────────┘               │
                         │                            │
                         ▼                            │
          ┌──────────────────────────┐  ⌐S104        │
          │  CALCULATE |γest - γre|   │               │
          └──────────────────────────┘               │
                         │                            │
                         ▼                            │
                    ╱─────────────╲  ⌐S105           │
            ╱─────────────────────────╲     NO        │
           ╱   | γest -γre | ≥B?        ╲─────────────┤
           ╲                           ╱              │
            ╲─────────────────────────╱               │
                    ╲─────────────╱                   │
                         │                            │
                       YES                            │
                         │                            │
                         ▼                            ▼
          ┌────────────────────┐ ⌐S106   ┌────────────────────┐ ⌐S103
          │       A > 1        │         │       A = 1        │
          └────────────────────┘         └────────────────────┘
                    │                            │
                    │◄───────────────────────────┘
                    ▼
            ┌──────────────┐
            │     END      │
            └──────────────┘
```

# FIG.16

TORQUE
SIGNAL

ALTERNATIVE VEHICLE
SPEED
(VEHICLE SPEED
100[km/h])

Tref_a0

Tref_a

C

C/25

0

| θh1 |

STEERING
ANGLE | θh |

# FIG.17

# FIG.18

EP 3 892 523 B1

# FIG.19

# FIG.20

# FIG.21

# FIG.22

STEERING TORQUE
SENSITIVE GAIN

1.0

0         Ts1       Ts2

STEERING TORQUE [Nm]

# FIG.23

VEHICLE SPEED
SENSITIVE GAIN

1.0

0        Vs1    Vs2

VEHICLE SPEED [km/h]

# FIG.24

RUDDER ANGLE
SENSITIVE GAIN

1.0

0          θh1          θh2    STEERING ANGLE [deg]

# FIG.25

TORQUE SIGNAL
Tref_d

UPPER LIMIT VALUE

0

TORQUE SIGNAL
Tref_d0

LOWER LIMIT VALUE

# FIG.26

# FIG.27

SELF-ALIGNING TOQUE $|T_{SAT}|$

| Test |

0

STEERING ANGLE $|\theta h|$

# FIG.28

SELF-ALIGNING TOQUE $|T_{SAT}|$

| Test |

E

E

| Test - $T_{SAT}$ |

$|T_{SAT}1|$

0

$|\theta h1|$

STEERING ANGLE $|\theta h|$

# FIG.29

START

S201
VEHICLE SPEED
Vs FAILURE?  → NO

YES

S202
OUTPUT ESTIMATED YAW
RATE Test

S204
CALCULATE |Test - $T_{SAT}$|

S205
$|\text{Test} - T_{SAT}| \geq E$ ?  → NO

YES

S206
D > 1

S203
D = 1

END

FIG.30

# FIG.31

# FIG.32

# FIG.33

910

TARGET TURNING ANGLE GENERATION UNIT

θh → | RESTRIC-TION UNIT (931) | →θh1→ | RATE RESTRIC-TION UNIT (932) | →θh2→ | CORREC-TION UNIT (933) | → θtref

## FIG.34

EP 3 892 523 B1

# FIG.35

START

DETECT TURNING ANGLE AND MOTOR ANGLE ~S110

CALCULATE MOTOR ANGULAR VELOCITY ~S120

GENERATE TARGET STEERING TORQUE ~S130

CALCULATE TARGET TWIST ANGLE ~S140

PERFORM TWIST ANGLE CONTROL ~S150

PERFORM CURRENT CONTROL #1 ~S160

RESTRICT STEERING ANGLE ~S170

RESTRICT STEERING ANGLE CHANGE AMOUNT ~S180

CORRECT STEERING ANGLE ~S190

CALCULATE DEVIATION ~S200

PERFORM TURNING ANGLE FB COMPENSATION ~S210

PERFORM DIFFERENTIAL CALCULATION ~S220

PERFORM SPEED CONTROL ~S230

RESTRICT OUTPUT ~S240

OUTPUT MOTOR CURRENT COMMAND VALUE ~S250

PERFORM CURRENT CONTROL #2 ~S260

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2004131046 A